(19) Europäisches Patentamt
European Patent Office
Office européen des brevets

(11) EP 2 046 682 B1

(12) **FASCICULE DE BREVET EUROPEEN**

(45) Date de publication et mention de la délivrance du brevet:
**23.11.2016 Bulletin 2016/47**

(21) Numéro de dépôt: **07803866.8**

(22) Date de dépôt: **13.07.2007**

(51) Int Cl.:
***C01B 33/38*** *(2006.01)* ***C09C 1/28*** *(2006.01)*
***C01B 33/22*** *(2006.01)*

(86) Numéro de dépôt international:
**PCT/FR2007/001201**

(87) Numéro de publication internationale:
**WO 2008/009800 (24.01.2008 Gazette 2008/04)**

(54) **PRÉPARATION D'UNE COMPOSITION D'UN INTERSTRATIFIÉ T.O.T.-T.O.T. GONFLANT**

HERSTELLUNG EINER ZUSAMMENSETZUNG FÜR EINE T.O.T.-T.O.T.-QUELLZWISCHENSCHICHT

PREPARATION OF A COMPOSITION OF A SWELLING T.O.T.-T.O.T. INTERLAYER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.07.2006 FR 0606474**

(43) Date de publication de la demande:
**15.04.2009 Bulletin 2009/16**

(73) Titulaires:
- **Luzenac Europe SAS**
  **31100 Toulouse (FR)**
- **CENTRE NATIONAL DE LA RECHERCHE SCIENTIFIQUE -CNRS-**
  **75016 Paris (FR)**

(72) Inventeurs:
- **MARTIN, François**
  **31570 St Foy d'Aigrefeuille (FR)**
- **FERRET, Jocelyne**
  **31100 Toulouse (FR)**
- **LEBRE, Cédric**
  **46140 Luzech (FR)**
- **PETIT, Sabine**
  **86210 Bonneuil Matours (FR)**
- **GRAUBY, Olivier**
  **13390 Auriol (FR)**
- **BONINO, Jean-Pierre**
  **31320 Pechabou (FR)**
- **ARSEGUEL, Didier**
  **31450 Deyme (FR)**
- **DECARREAU, Alain**
  **86000 Poitiers (FR)**
- **FERRAGE, Eric**
  **31500 Toulouse (FR)**

(74) Mandataire: **Cabinet BARRE LAFORGUE & associés**
**35, rue Lancefoc**
**31000 Toulouse (FR)**

(56) Documents cités:
- **A. DECARREAU, H. MONDÉSIR, G. BESSON: "Synthèse et stabilité des stévensites et talcs, magnésiens et nickelifères, entre 80 et 240°C" C.R: ACAD. SCI. PARIS, vol. 308, no. II, 1989, pages 301-306, XP008075903**
- **F. MARTIN, S. PETIT, A. DECARREAU, O. GRAUBY, J. L. HAZEMANN, Y. NOACK: "Experimental study of Si-Ge tetrahedral solid solution in Ni-Co-Mg talcs" THIN SOLID FILMS, vol. 222, 1992, pages 189-195, XP002422974**

EP 2 046 682 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne un procédé de préparation de compositions comprenant un interstratifié (phyllogermanosilicate 2/1) - (phyllogermanosilicate gonflant), dites compositions d'interstratifié T.O.T.-T.O.T. gonflant, qui peuvent être utilisées notamment comme précurseur pour la préparation de compositions, dites compositions talqueuses, y compris des compositions de talc synthétique.

Les smectites correspondent au groupe le plus diversifié des minéraux argileux 2/1. Au vu de leur structure, elles sont qualifiées de type T.O.T. (tétraèdre-octaèdre-tétraèdre) gonflant.

Elles sont en effet constituées par un empilement irrégulier de feuillets élémentaires de structure cristalline, dont le nombre varie de quelques unités à quelques dizaines d'unités ; chaque feuillet élémentaire étant constitué par l'association de deux couches de tétraèdres situées de part et d'autre d'une couche d'octaèdres.

La couche octaédrique des smectites est formée de deux plans d'ions $O^{2-}$ et $OH^-$ (dans la proportion molaire $O^{2-}/OH^-$ de 2:1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires. Dans les smectites naturelles, les sites tétraédriques sont généralement occupés par des ions $Si^{4+}$ ou $Al^{3+}$, et les sites octaédriques le sont le plus souvent par les cations $Mg^{2+}$, $Fe^{2+}$, $Al^{3+}$ et/ou $Fe^{3+}$. Une faible proportion des sites octaédriques et/ou tétraédriques n'est pas occupée et est responsable du déficit cationique du réseau cristallin formant les feuillets élémentaires.

Les smectites se caractérisent également par la présence, entre les feuillets élémentaires, d'espaces interfoliaires qui renferment de l'eau et des cations et qui forment la phase gonflante du minéral. Dans les smectites

naturelles, ces cations interfoliaires sont généralement des ions $Mg^{2+}$, $Ca^{2+}$ et/ou $Na^+$.

Cette structure particulière confère aux smectites la particularité de pouvoir former facilement des complexes lamellaires avec l'eau et avec de nombreuses molécules organiques, tels que le glycérol et l'éthylène glycol, qui s'insèrent dans l'espace interfoliaire. Egalement, les cations interfoliaires sont faiblement liés au reste du réseau et de ce fait sont susceptibles d'être échangés avec d'autres cations, avec plus ou moins de facilité. On parle de capacité d'échange cationique du minéral.

Il est à noter que la publication « synthèse et stabilité des stévensites et talcs, magnésiens et nickelifères, entre 80 et 240 °C » A. Decarreau et al XP008075903, décrit un procédé permettant d'obtenir différents minéraux, stévensites, kérolites et talcs, la formation de chaque minéral dépendant strictement de la température. Aucun des minéraux obtenus par ce procédé ne présente un diffractogramme comprenant un pic de diffraction pour un plan (001) représentatif d'une phase minérale gonflante, situé à une distance de l'ordre de 14 à 15 angströms. Ce document ne décrit pas des compositions d'interstratifié T.O.T.-T.O.T. gonflant, ni un procédé permettant d'obtenir de telles compositions.

L'invention vise à proposer un procédé de préparation de compositions comprenant des particules minérales de structure et de capacité d'échange cationique rappelant celles des smectites naturelles, et dont les caractéristiques structurelles, tels que cristallinité et ratio - phase gonflante/phase minérale non gonflante -, au vu des paramètres particuliers appliqués lors de la mise en oeuvre dudit procédé, peuvent être prévisibles et/ou relativement bien définies.

L'invention vise à proposer un tel procédé dont la mise en oeuvre est simple et rapide, et est compatible avec les contraintes d'une exploitation industrielle.

La présente invention a aussi pour objectif de proposer un procédé permettant de préparer une grande diversité chimique de compositions comprenant des particules minérales de structure et de propriétés -notamment de capacité d'échange cationique- rappelant celles des smectites naturelles, et qui par des méthodes de transformation simples et rapides à mettre en oeuvre, pourront par la suite conduire à l'obtention d'une grande diversité de compositions talqueuses, c'est-à-dire des compositions chimiquement et structurellement très similaires à des compositions de talc naturel avec, éventuellement, des propriétés particulières améliorées.

A cet effet, l'invention concerne un procédé de préparation d'une composition comprenant des particules minérales, dites particules d'interstratifié T.O.T.-T.O.T. gonflant, formées d'une interstratification entre :

- au moins une phase minérale non gonflante, formée d'un empilement de feuillets élémentaires de type phyllogermanosilicate 2/1 et de formule chimique - $(Si_xGe_{1-x})4\ M_3O_{10}(OH)_2$ -, et
- au moins une phase minérale gonflante, formée d'un empilement de feuillets élémentaires de type phyllogermanosilicate 2/1 et d'au moins un espace interfoliaire entre deux feuillets élémentaires consécutifs ; ladite phase minérale gonflante ayant pour formule chimique $-(Si_xGe_{1-x})_4M_{3-\varepsilon}\,O_{10}(OH)_2,\ (M^{2+})_{\varepsilon'}\bullet nH_2O-$,
  dans lesdites formules chimiques :
  - M désignant au moins un métal divalent et ayant pour formule $Mg_{y(1)}Co_{y(2}Zn_{y(3)}Cu_{y(4)}Mn_{y(5)}Fe_{y(6)}Ni_{y(7)}Cr_{y(8)}$ ;

chaque *y(i)* représentant un nombre réel de l'intervalle [0 ; 1], et tel que $\sum_{i=1}^{8} y(i) = 1,$

- *x* est un nombre réel de l'intervalle [0 ; 1],
- $\varepsilon$ et $\varepsilon'$ se rapportent respectivement au déficit cationique des feuillets élémentaires de la phase gonflante, et aux cations présents dans l'(les) espace(s) interfoliaire(s),
ladite composition présentant un diffractogramme des rayons X (obtenu suite à une analyse en diffraction des rayons X desdites particules d'interstratifié T.O.T.-T.O.T. gonflant) comprenant des pics de diffraction caractéristiques suivants :

  - un plan (001) situé à une distance de l'ordre de 14-15 Å, représentatif de ladite phase minérale gonflante,
  - des plans représentatifs de ladite phase minérale non gonflante :

    - un plan (001) situé à une distance de l'ordre de 9,60-10,50 Å ;
    - un plan (020) situé à 4,50-4,60 Å ;
    - un plan (003) situé à 3,10-3,20 Å ;
    - un plan (060) situé à 1,50-1,55 Å,

ledit procédé étant caractérisé en ce qu'on réalise un traitement hydrothermal d'un gel silico/germano-métallique de formule chimique - $(Si_xGe_{1-x})_4M_3O_{11}$, $n'H_2O$-, à l'état liquide ; on réalise ledit traitement hydrothermal pendant une durée et à une température comprise entre 150°C et 300°C, choisies en fonction des caractéristiques structurelles souhaitées pour lesdites particules d'interstratifié T.O.T.-T.O.T. gonflant à préparer ; on réalise ledit traitement hydrothermal à une pression contrôlée de l'ordre de 16 bars et sous agitation ; pour une température et une durée de traitement hydrothermal déterminées, on réalise une adjonction complémentaire d'eau audit gel silico/germano-silicate de façon à ajuster le ratio eau/solide représentatif du mélange réactionnel à base de gel silico/germano-métallique à traiter, en fonction du rapport volumique -phase minérale gonflante/phase minérale non gonflante - souhaité pour les particules d'interstratifié T.O.T.-T.O.T. gonflant à préparer.

Il est à noter que la publication « synthèse et stabilité des stévensites et talcs, magnésiens et nickelifères, entre 80 et 240 °C » A. Decarreau *et al* XP008075903, décrit un procédé permettant d'obtenir différents minéraux, stévensites, kérolites et talcs, la formation de chaque minéral dépendant strictement de la température. Aucun des minéraux obtenus par ce procédé ne présente diffractogramme comprenant un pic de diffraction pour un plan (001) représentatif d'une phase minérale gonflante, situé à une distance de l'ordre de 14 à 15 angströms. Ce document ne décrit pas des compositions d'interstratifié T.O.T.-T.O.T. gonflant, ni un procédé permettant d'obtenir de telles compositions.

Selon l'invention, le produit silico/germano-métallique de départ, qui est directement soumis au traitement hydrothermal, se présente sous la forme d'un gel, c'est-à-dire une substance fortement hydratée, ayant une consistance gélatineuse. Ce gel présente un comportement thixotropique et est rendu liquide par une simple agitation mécanique.

Dans un procédé selon l'invention, l'adjonction complémentaire d'eau permet aussi de prévenir la calcination de la fraction solide (le gel de départ, le produit final, les éventuels produits intermédiaires). La nécessité de cette adjonction d'eau et la quantité d'eau minimale à ajouter pour éviter la calcination dépendent essentiellement du degré d'hydratation du gel initial, de la température de traitement ainsi que de la durée de ce traitement. Néanmoins, la proportion eau/solide choisie pour effectuer le traitement hydrothermal n'est pas anodine, elle influe sur certaines des propriétés physico-chimiques et structurelles des particules d'interstratifié T.O.T.-T.O.T. gonflant qui seront obtenues au final. En particulier, cette proportion influe de manière significative sur la cristallinité du produit et sur la proportion -phase minérale gonflante/phase minérale non gonflante -, et donc *in fine* notamment sur la capacité d'échange cationique du produit obtenu, ainsi que sur la capacité de celui-ci à être chargé en diverses molécules et substances.

La durée du traitement hydrothermal, qui peut aller d'un jour à plusieurs jours, a une grande influence notamment sur la cristallinité du minéral synthétique obtenu au final.

Avantageusement et selon l'invention, on effectue le traitement hydrothermal dudit gel silico/germano-métallique au moyen d'un autoclave. De préférence, on utilise un autoclave en acier à chemisage intérieur en polytétrafluoroéthylène (Téflon®), en titane ou en acier inoxydable.

Avantageusement et selon l'invention, on réalise ledit traitement hydrothermal à une température de l'ordre de 220°C, pour une durée de l'ordre de 15 jours. Selon une variante de réalisation, on réalise ledit traitement hydrothermal à une température de l'ordre de 300°C, pour une durée de l'ordre de 5 heures.

Pour réaliser le traitement hydrothermal sous agitation, on peut par exemple disposer un barreau aimanté à l'intérieur de l'autoclave.

Au terme d'un traitement hydrothermal conforme à l'invention, on obtient une composition minérale synthétique se présentant sous la forme d'une solution colloïdale renfermant lesdites particules d'interstratifié T.O.T.-T.O.T. gonflant.

Ces particules minérales synthétiques, en solution dans l'eau, peuvent se trouver soit dans un état plus ou moins individualisé les unes par rapport aux autres, soit sont organisées en agrégats plus ou moins grossiers formés de particules élémentaires d'interstratifié T.O.T.-T.O.T. gonflant, agrégées les unes aux autres.

Avantageusement et selon l'invention, à l'issue du traitement hydrothermal, on récupère une composition colloïdale et on soumet ladite composition colloïdale à une étape de séchage suivie d'une étape de broyage mécanique pour obtenir une composition solide comprenant des particules d'interstratifié T.O.T.-T.O.T. gonflant individualisées

Avantageusement et selon l'invention, le séchage peut être réalisé au moyen d'une étuve ; par exemple, à une température de l'ordre de 60°C, pendant au moins un à deux jours. Le broyage est réalisé avantageusement de façon mécanique ; par exemple avec un mortier, de préférence en agate pour éviter tout risque de contamination de la composition minérale ainsi préparée.

Selon un mode particulier de mise en oeuvre de l'invention, on prépare avantageusement le gel silico/germano-métallique de départ par une réaction de coprécipitation entre :

- une composition liquide comprenant au moins une solution saline choisie parmi : une solution de métasilicate de sodium ($Na_2OSiO_2$) et une solution de métagermanate de sodium ($Na_2OGeO_2$) ; les quantités respectives de ces deux solutions sont choisies pour obtenir une composition liquide présentant les ratios de concentration molaire suivants :

$$\frac{[Na_2OSiO_2]}{[Na_2OSiO_2]+[Na_2OGeO_2]}=x \text{ et } \frac{[Na_2OGeO_2]}{[Na_2OSiO_2]+[Na_2OGeO_2]}=1-x\ ;$$

  et

- une solution de chlorure(s) métallique(s) ($MCl_2$) comprenant au moins un chlorure de métal divalent choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; avec un ratio de concentration molaire pour chacun desdits chlorures de métal, tel que :

$$\frac{[\text{métal divalent}]_{(i)}}{[M]_{(\text{totale})}}=y(i)$$

- en présence d'une solution d'acide chlorhydrique.

Ce faisant, on réalise la réaction chimique suivante :

$$4\begin{pmatrix}(Na_2OSiO_2)_x\\ \\(Na_2OGeO_2)_{1-x}\end{pmatrix}\begin{matrix}3MCl_2\\+2HCl\\mH_2O\end{matrix}\rightleftharpoons [(Si_xGe_{1-x})_4M_3O_{11},n'H_2O]+8NaCl+(m-n'+1)H_2O$$

m, n'et (m-n'+1) étant des nombres entiers positifs.

La préparation de ce type de gel est bien connue et, à titre d'exemple, on peut suivre les instructions données dans la publication Decarreau et al., 1989 ("Synthèse et stabilité des stévensites kérolites et talcs, magnésiens et nickelifères, entre 80 et 240°C" -R. Acad. Scie. Paris-, t. 308, série II, p.301-306).

Avantageusement et en pratique, pour réaliser le gel silico/germano-métallique de formule $-(Si_xGe_{1-x})_4M_3O_{11}$, $n'H_2O$-, on réalise successivement les étapes suivantes :

- on prépare une composition acide de chlorure de métal ($MCl_2$, $nH_2O$) en faisant dissoudre dans un volume d'eau une quantité appropriée d'une composition de cristaux hygroscopiques d'au moins un chlorure de métal choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; puis on y rajoute l'acide chlorhydrique (HCl),
- on prépare une composition liquide en faisant dissoudre dans un volume d'eau appropriée une quantité d'au moins un sel choisi parmi : le métasilicate de sodium et le métagermanate de sodium,

- on mélange les deux compositions aqueuses dans des proportions choisies pour provoquer la formation d'un gel de coprécipitation.

Les quantités utilisées des différents réactifs sont choisies pour que les ions $Na^+$ et $Cl^-$ à l'issue de la réaction de coprécipitation soient présents en quantités équimolaires. La solution saline ($Na^+$, $Cl^-$) ainsi formée peut être éliminée simplement en procédant à une séparation liquide/solide.

Une fois la coprécipitation survenue, on récupère le gel silico/germano-métallique, par exemple, par centrifugation ou filtration, pour le soumettre à un traitement hydrothermal conforme à l'invention. En récupérant ainsi ce gel de coprécipitation, on le débarrasse par la même occasion des ions $Na^+$ et $Cl^-$ qui sont particulièrement néfastes pour une bonne cristallisation des particules minérales silico/germano-métalliques.

Avantageusement et selon l'invention, une fois le gel de coprécipitation récupéré, on réalise au moins un lavage de celui-ci à l'eau (par exemple avec de l'eau distillée ou osmosée, ou avec de l'eau du robinet) notamment pour le débarrasser de tous ions $Na^+$ et $Cl^-$.

L'invention concerne également des compositions comprenant des particules d'interstratifié T.O.T.-T.O.T. gonflant obtenues par un procédé conforme à l'invention.

Avantageusement et selon l'invention, les particules minérales desdites compositions ont toutes une même entité physico-chimique.

En l'occurrence, il s'agit de particules d'interstratifié T.O.T.-T.O.T. gonflant, qui sont formées d'une interstratification entre :

- au moins une phase minérale non gonflante, formée d'un empilement de feuillets élémentaires de type phyllogermanosilicate 2/1 et de formule chimique - $(Si_xGe_{1-x})_4M_3O_{10}(OH)_2$-, et
- au moins une phase minérale gonflante, formée d'un empilement de feuillets élémentaires de type phyllogermanosilicate 2/1 et d'au moins un espace interfoliaire entre deux feuillets élémentaires consécutifs ; ladite phase minérale gonflante ayant pour formule chimique - $(Si_xGe_{1-x})_4M_{3-\varepsilon}O_{10}(OH)_2$, $(M^{2+})_{\varepsilon'}$●$nH_2O$-.

En particulier, une composition selon l'invention présente un diffractogramme, résultant d'une analyse en diffraction des rayons X desdites particules d'interstratifié T.O.T.-T.O.T. gonflant, présentant les pics de diffraction caractéristiques suivants :

- un plan (001) situé à une distance de l'ordre de 14-15 Å, représentatif de ladite phase minérale gonflante,
- des plans représentatifs de ladite phase minérale non gonflante :
    - un plan (001) situé à une distance de l'ordre de 9,60-10,50 Å ;
    - un plan (020) situé à 4,50-4,60 Å ;
    - un plan (003) situé à 3,10-3,20 Å ;
    - un plan (060) situé à 1,50-1,55 Å.

Une composition d'interstratifié T.O.T.-T.O.T. gonflant selon l'invention peut se présenter sous une forme "brute", dans laquelle les particules d'interstratifié T.O.T.-T.O.T. gonflant sont agrégées les unes aux autres en agrégats. Une telle composition talqueuse peut être notamment issue directement d'un traitement hydrothermal conforme à l'invention, avant qu'elle ne soit soumise à une séquence de séchage et de broyage.

Une composition d'interstratifié T.O.T.-T.O.T. gonflant selon l'invention peut, également et avantageusement, être présentée sous la forme d'une composition, pulvérulente et déshydratée, dans laquelle les particules d'interstratifié T.O.T.-T.O.T. gonflant sont individualisées. Compte tenu de la pulvérulence de telles particules, du fait de leur faible granulométrie (de quelques dizaines de nanomètres à une dizaine de micromètres), celles-ci sont alors avantageusement mises en solution aux fins de conservation, jusqu'au moment de leur utilisation. Dans ce contexte, les particules d'interstratifié T.O.T.-T.O.T. gonflant d'une composition selon l'invention se présentent sous une forme individualisée et dispersée dans un liquide.

Dans les formules chimiques représentatives de phases minérales non gonflantes et des phases minérales gonflantes, - $(Si_xGe_{1-x})_4$ $M_3O_{10}(OH)_2$ - et -$(Si_xGe_{1-x})_4M_{3-\varepsilon}O_{10}(OH)_2$, $(M^{2+})_{\varepsilon'}$●$nH_2O$-, des particules d'interstratifié T.O.T.-T.O.T. gonflant susceptibles d'être préparées conformément à l'invention, Si et Ge se réfèrent aux ions silicium et/ou aux ions germanium qui occupent les sites tétraédriques du réseau cristallin. M symbolise les cations métalliques divalents des sites octaédriques (par exemple $Mg^{2+}$, $Co^{2+}$, $Zn^{2+}$, $Cu^{2+}$, $Mn^{2+}$, $Fe^{2+}$, $Ni^{2+}$ et/ou $Cr^{2+}$).

Ainsi, à titre de compositions d'interstratifié T.O.T.-T.O.T. gonflant au sens de l'invention, on peut citer à titre d'exemple particulier, des compositions d'interstratifié talc-stévensite synthétique dans lesquelles les particules minérales forment une interstratification entre :

- un empilement de feuillets de talc, de formule $-Si_4Mg_3O_{10}(OH)_2-$, qui forme la phase minérale non gonflante, et
- un empilement de feuillets de type stévensite, de formule $-(Si_4Mg_{3-\varepsilon}O_{10}(OH)_2, (Mg^{2+})_{\varepsilon'}$●$nH_2O-$, qui forme la phase minérale gonflante.

Egalement, à titre de compositions d'interstratifié T.O.T.-T.O.T. gonflant au sens de l'invention, il peut aussi s'agir de compositions analogues à une composition d'interstratifiée talc-stévensite, par exemple, des compositions dites "germanifères", dans lesquelles au moins une partie des cations $Si^{4+}$ des sites tétraédriques est substituée par des cations $Ge^{4+}$. De même, il peut s'agir de compositions dites "dérivées" ou dites "fonctionnalisées", par exemple lorsque les cations $Mg^{2+}$ des sites octaédriques, en proportions variables, sont remplacés par d'autres cations divalents en vue d'obtenir des particules aux propriétés physiques, notamment optique et/ou électrique et/ou magnétique, améliorées par rapport à des particules de talc naturel.

Des analyses réalisées notamment en diffraction des rayons X ont permis aux inventeurs de caractériser les phases minéralogiques des particules synthétisées, et confirment qu'un traitement hydrothermal conforme à l'invention, appliqué directement sur un gel silicométallique de formule chimique $-Si_4Mg_3O_{11}, n'H_2O-$ (c'est-à-dire un gel silico/germano-métallique de formule chimique $-(Si_xGe_{1-x})_4M_3O_{11}, n'H_2O-$, dans laquelle x est égal à 1, et M désigne le magnésium) conduit à l'obtention d'une composition colloïdale comprenant des particules d'interstratifié talc-stévensite.

D'autre part, ces analyses ont permis d'établir l'influence du ratio eau/solide représentatif du mélange réactionnel à base de gel silico/germano-métallique, sur la proportion de la phase gonflante dans le minéral synthétique préparé. Pour une température et un temps de traitement hydrothermal donnés, plus ce ratio augmente et plus la part qui correspond à la phase gonflante diminue.

Par ailleurs, les inventeurs ont aussi constaté de manière surprenante qu'un traitement thermique anhydre, réalisé à une température au moins supérieure à 300°C, notamment de l'ordre de 500-550°C, et à basse pression (inférieure à 5 bars, notamment à pression atmosphérique) permet de façon extrêmement simple de convertir une composition d'interstratifié talc-stévensite synthétique ainsi préparée en une composition de talc synthétique stable et pure, de formule chimique $-Si_4Mg_3O_{10}(OH)_2-$.

Enfin, les inventeurs ont établi que cette méthode de conversion pouvait être généralisée à l'ensemble des compositions d'interstratifié T.O.T.-T.O.T. gonflant conformes à l'invention (c'est-à-dire, issues d'un traitement hydrothermal d'un gel silico/germano-métallique répondant à la formule chimique $-(Si_xGe_{1-x})_4M_3O_{11}, n'H_2O-$) pour préparer des compositions talqueuses, c'est-à-dire des compositions comprenant des particules minérales de formule $(Si_xGe_{1-x})_4M_3O_{10}(OH)_2$, structurellement très similaires à une composition de talc naturel et manifestant, éventuellement, des propriétés particulières améliorées. De telles compositions talqueuses peuvent avantageusement se substituer à des compositions de talc naturel dans diverses applications.

Dans ce contexte, l'invention s'étend à un procédé de préparation d'une composition, dite composition talqueuse, comprenant des particules minérales silico/germano-métalliques synthétiques ayant une structure cristalline et lamellaire, et une formule $-(Si_xGe_{1-x})_4M_3O_{10}(OH)_2-$,

- M désignant au moins un métal divalent et ayant pour formule $Mg_{y(1)}Co_{y(2}\ Zn_{y(3)}Cu_{y(4)}Mn_{y(5)}Fe_{y(6)}Ni_{y(7)}Cr_{y(8)}$ ; chaque $y(i)$ représentant un nombre réel de l'intervalle [0 ; 1], et tel que $\sum_{i=1}^{8} y(i) = 1,$
- x étant un nombre réel de l'intervalle [0 ; 1].

Pour ce faire, on soumet une composition comprenant des particules d'interstratifié T.O.T.-T.O.T. gonflant selon l'invention, à un traitement thermique anhydre effectué à une pression inférieure à 5 bars, pendant une durée et avec une température de traitement supérieure à 300°C, choisies de façon à obtenir une cristallinité et une stabilité souhaitées pour lesdites particules minérales silico/germano-métalliques synthétiques à préparer.

Avantageusement et selon l'invention, on réalise ledit traitement thermique anhydre à une température de l'ordre de 500-550°C, notamment à l'air ambiant et à l'intérieur d'un creuset.

L'invention concerne aussi un procédé de préparation d'une composition d'interstratifié T.O.T.-T.O.T. gonflant, une composition d'interstratifié T.O.T.-T.O.T. gonflant ainsi obtenue, un procédé de fabrication d'une composition talqueuse, caractérisés en combinaison par tout ou partie des caractéristiques mentionnées ci-dessus ou ci-après.

D'autres buts, avantages et caractéristiques de l'invention apparaissent à la lecture de la description et des exemples qui suivent et qui se réfèrent aux figures annexées dans lesquelles :

- la figure 1 montre les diffractogrammes correspondant à l'analyse en diffraction des rayons X effectuée sur quatre compositions d'interstratifié T.O.T.-T.O.T. gonflant selon l'invention, préparées avec des proportions eau/solide différentes, lors du traitement hydrothermal,

- les figures 2a à 2d correspondent à des analyses en diffraction des rayons X effectuées sur des lames orientées saturées en éthylène glycol et calcium, préparées avec les quatre compositions précédentes d'interstratifié T.O.T.-T.O.T. gonflant,
- la figure 3 montre trois spectres d'absorption enregistrés dans le moyen infrarouge, et qui correspondent à trois compositions minérales synthétiques particulières,
- les figures 4a et 4b correspondent à des agrandissements des spectres de la figure 1, réalisés au niveau de zones particulières,
- la figure 5 correspond à des spectres d'absorption enregistrés en proche infrarouge, illustrant la conversion par un traitement thermique anhydre d'une composition d'interstratifié T.O.T.-T.O.T. gonflant selon l'invention en une composition talqueuse,
- la figure 6 montre trois diffractogrammes correspondant à l'analyse en diffraction des rayons X des compositions minérales objets des figures 3, 4a, 4b et 5, et en confirme les observations,
- les figures 7 et 8 sont des représentations schématiques qui illustrent respectivement l'organisation cristalline des particules de talc synthétique obtenues à partir de particules d'interstratifié talc-stévensite synthétique obtenues selon l'invention, après une conversion par un traitement thermique anhydre selon l'invention, et l'organisation cristalline des particules de stévensite synthétique obtenues selon l'invention.

A/ - PROTOCOLE GENERAL DE SYNTHESE D'UNE COMPOSITION D'INTERSTRATIFIE T.O.T.-T.O.T. GONFLANT SELON L'INVENTION

1/ - Préparation d'un gel silico/germano-métallique

Le gel silico/germano-métallique est préparé par une coprécipitation selon l'équation de réaction suivante :

$$4\begin{pmatrix}(Na_2OSiO_2)_x\\(Na_2OGeO_2)_{1-x}\end{pmatrix}+2HCl+mH_2O+3\begin{pmatrix}y_{(1)}(MgCl_2)+y_{(2)}(CoCl_2)+y_{(3)}(ZnCl_2)\\+y_{(4)}(CuCl_2)+y_{(5)}(MnCl_2)+y_{(6)}(FeCl_2)\\+y_{(7)}(NiCl_2)+y_{(8)}(CrCl_2)\end{pmatrix}$$

$$\longrightarrow [(Si_xGe_{1-x})_4M_3O_{11}, n'H_2O]+8NaCl+(m-n'+1)H_2O$$

Cette réaction de coprécipitation permet d'obtenir un gel silico/germano-métallique hydraté ayant la stoechiométrie du talc (4 Si/Ge pour 3 M). Elle est mise en oeuvre à partir de :

1. une solution aqueuse de métasilicate de sodium penta-hydraté ou une solution aqueuse de métagermanate de sodium, ou un mélange de ces deux solutions dans les proportions molaires $x$:(1-$x$),
2. une solution de chlorure de métal, préparée avec un ou plusieurs sels de métal (sous la forme de cristaux hygroscopiques) dilué(s) dans de l'eau distillée, et
3. une solution d'acide chlorhydrique 1N.

La préparation du gel silico/germano-métallique est réalisée en suivant le protocole suivant :

1. on mélange les solutions d'acide chlorhydrique et la solution de chlorure de métal (ou de métaux),
2. on ajoute ce mélange à la solution de métasilicate et/ou de métagermanate de sodium ; le gel de coprécipitation se forme instantanément,
3. on récupère le gel après centrifugation (à 7000 tours/min, pendant 15 min) et élimination du surnageant (solution de chlorure de sodium formée),
4. on lave le gel avec de l'eau distillée ou osmosée, ou avec de l'eau du robinet (au minimum deux cycles de lavage/centrifugation sont nécessaires).

A l'issue de cette première phase, on obtient un gel silico/germano-métallique - $(Si_xGe_{1-x})_4M_3O_{11}$, $n'H_2O$-hydraté et de consistance gélatineuse. Ce gel présente un comportement thixotropique, c'est-à-dire qu'il passe d'un état visqueux à un état liquide lorsqu'on l'agite, puis retrouve son état initial si on le laisse au repos pendant un temps suffisant.

2/ - Traitement hydrothermal du gel silico/germano-métallique

Le gel silico/germano-métallique tel que précédemment obtenu est soumis à un traitement hydrothermale, à une température de 150°C à 300°C.

Pour ce faire :

1. on place le gel, sous forme liquéfiée, dans un réacteur (de 40 ml) ; éventuellement on ajuste le rapport eau/solide, notamment pour éviter la calcination de la fraction solide) ; afin d'éviter tout problème de fuite du réacteur, celui-ci est rempli au 2/3 de son volume,
2. le réacteur est placé à l'intérieur d'une étuve, à la température de réaction (établie entre 150°C et 300°C), pendant toute la durée du traitement.

Au cours du traitement hydrothermal, le gel silico/germano-métallique perd progressivement sa consistance initiale pour devenir une composition solide particulaire dont la cristallinité augmente avec le temps. Cette cristallisation progressive de la matière peut être constatée par une analyse en diffraction des rayons X et se traduit, sur les diffractogrammes correspondants, par l'apparition de pics caractéristiques qui s'affinent et s'intensifient tout au long du traitement.

A l'issue de ce traitement hydrothermal, on obtient une composition colloïdale comprenant des particules d'interstratifié T.O.T.-T.O.T. gonflant, en solution dans l'eau. Au terme de ce traitement hydrothermal :

3. le contenu du réacteur est filtré pour en récupérer le filtrat solide,
4. on sèche le filtrat à l'étuve à 60°C, pendant 1 jour,
5. une fois sec, le filtrat est broyé au mortier en agate.

On obtient au final une composition solide divisée dont la couleur est fonction de la nature du ou des chlorure(s) de métal utilisé(s) pour la préparation du gel silico/germano-métallique (et également, le cas échéant, des proportions respectives de ces chlorures de métal).

Par exemple, les particules d'interstratifié d'interstratifié T.O.T.-T.O.T. gonflant de type :

- $Si_4Mg_3O_{10}(OH)_2$ / $Si_4Mg_{3-\varepsilon}O_{10}(OH)_2$, $(Mg^{2+})_{\varepsilon'}$●$nH_2O$, sont de couleur blanche,
- $Si_4Ni_3O_{10}(OH)_2$ / $Si_4Ni_{3-\varepsilon}O_{10}(OH)_2$, $(Ni^{2+})_{\varepsilon'}$●$nH_2O$, sont de couleur verte,
- $Si_4Co_3O_{10}(OH)_2$ / $Si_4Co_{3-\varepsilon}O_{10}(OH)_2$, $(Co^{2+})_{\varepsilon'}$●$nH_2O$, sont de couleur rose,
- $Si_4Cu_3O_{10}(OH)_2$ / $Si_4Cu_{3-\varepsilon}O_{10}(OH)_2$, $(Cu^{2+})_{\varepsilon'}$●$nH_2O$, sont de couleur bleue,
- $Si_4Mn_3O_{10}(OH)_2$ / $Si_4Mn_{3-\varepsilon}O_{10}(OH)_2$, $(Mn^{2+})_{\varepsilon'}$●$nH_2O$, sont de couleur chocolat,
- $Si_4Fe_3O_{10}(OH)_2$ / $Si_4Fe_{3-\varepsilon}O_{10}(OH)_2$, $(Fe^{2+})_{\varepsilon'}$●$nH_2O$, sont de couleur grise à rouille,
- $Si_4Zn_3O_{10}(OH)_2$ / $Si_4Zn_{3-\varepsilon}O_{10}(OH)_2$, $(Zn^{2+})_{\varepsilon'}$●$nH_2O$, sont de couleur blanche.

B/ - ANALYSE ET CARACTERISATION STRUCTURELLES

Différentes compositions d'interstratifié T.O.T.-T.O.T. gonflant obtenues en suivant le protocole précédemment exposé, ont été analysées notamment en diffraction des rayons X.

Certains des résultats recueillis sont ci-après présentés et commentés. Ils concernent quatre compositions particulières d'interstratifié T.O.T.-T.O.T. gonflant. En l'occurrence, il s'agit de compositions d'interstratifié talc-stévensite préparées avec un traitement hydrothermal à 220°C, à 16 bars et pendant 21 jours.

Ces quatre compositions se distinguent les unes des autres par les proportions eau/solide qui ont été utilisées lors du traitement hydrothermal des gels silicométalliques - $Si_4Mg_3O_{11}$, $n'H_2O$-.

Ces compostions sont désignées R100, R50, R25 et R10 en référence à la proportion eau/solide utilisée (la quantité d'eau étant exprimée en litre et la quantité de solide, en kg).

En particulier, ces proportions ont été obtenues avec les mélanges suivants :

- composition R100 : 30 ml d'eau pour 300 mg de solide (fraction solide du gel),
- composition R50 : 20 ml d'eau pour 400 mg de solide,
- composition R25 : 20 ml d'eau pour 800 mg de solide,
- composition R10 : 10 ml d'eau pour 1000 mg de solide.

1/ - Analyses en diffraction des rayons X

La figure 1 présente les résultats d'analyses réalisées en diffraction des rayons X obtenus avec les quatre

compositions précédentes.

Les diffractogrammes ont été enregistrés sur un appareil XPERT-MPD (PanAnalytical). Le pas de mesure 2θ est de 0,01° avec un temps d'accumulation de 2 sec/pas. La tension d'accélération est de 40 kV, et l'intensité de 55 mA. La relation de Bragg donnant l'équidistance structurale est : $d_{hkl}$=0,7703/sinθ.

Les diffractogrammes RX obtenus présentent, dans les plans (020), (003) et (060), des pics de diffraction dont les positions sont très proches des celles des pics de diffractions caractéristiques d'un talc naturel :

- pour le plan (020), un pic situé à une distance de 4,52-4,55 A (4,55 Å, pour le talc naturel) ;
- pour le plan (003), un pic situé à 3,14-3,18 Å (3,12 Å, pour le talc naturel) ;
- pour le plan (060), un pic situé à 1,52-1,53 Å (1,53 Å, pour le talc naturel).

Quant au plan (001), la position des pics de diffraction correspondant est située à une distance variant entre 9,71 Å et 10,32 Å. Cette distance diffère notablement des 9,35 Å représentatif du plan (001) d'un talc naturel.

Ce décalage du pic correspondant au plan (001) ainsi que la présence d'un pic pointé à une distance de l'ordre de 14-15 Å, notamment à 14,6 Å, reflète une interstratification de la phase minéral talqueuse non gonflante, avec une autre phase minérale, la stévensite, qui forme la phase minérale gonflante.

Ceci est confirmé, d'une part, par la constatation que plus la quantité relative de stévensite est importante dans les particules minérales, plus le pic de diffraction du plan (001) se décale vers les petits angles de diffraction. D'autre part, une analyse en diffraction des rayons X a également été réalisée sur des lames orientées saturées en éthylène glycol et calcium, en vu de confirmer la présence d'une interstratification talc-stévensite.

Les lames orientées ont été préparées selon le protocole suivant :

1. on place dans un eppendorff de 1,25 ml, 15 mg d'échantillon auquel on ajoute une solution de $CaCl_2$ 1N ; le mélange est agité au vortex pendant une trentaine de secondes puis est laissé au repos pendant environ 1 heure,
2. le mélange est centrifugé à 7000 tours/min pendant 15 min, puis on élimine le surnageant,
3. le culot est remis en suspension dans une solution de $CaCl_2$ 1N ; le mélange est agité au vortex pendant une trentaine de secondes, puis est laissé reposer pendant environ 12 heures,
4. le mélange est centrifugé à 7000 tours/min pendant 15 minutes, puis on élimine le surnageant,
5. le culot est lavé à l'eau osmosée : après adjonction de l'eau osmosée, le mélange est agité au vortex et ultrasonné pendant 10 secondes, puis est laissé reposer pendant environ 1 heure avant d'être centrifugé à 7000 tours/min pendant 15 minutes pour en éliminer le surnageant ; ce lavage est répété 5 fois,
6. après le lavage, le culot, qui correspond à un produit saturé en calcium, est repris dans de l'eau osmosée, le mélange est agité au vortex pendant 30 secondes et ultrasonné pendant 10 secondes,
7. on prélève la solution ainsi préparée à l'aide d'une pipette et on la dépose sur une lame de verre,
8. une fois la lame séchée, on pulvérise de l'éthylène glycol sur celle-ci et on laisse agir pendant 5 minutes ; cette lame est maintenant saturée en calcium et en éthylène glycol et est prête pour les analyses.

Les figures 2a à 2d présentent les diffractogrammes RX obtenus. Le tableau 1 ci-après en résume les données.

Plus l'aire d'un pic de diffraction est importante, plus la phase minérale représentée par ce pic est en quantité importante dans l'échantillon.

Les pics 1, 2 et 3 repérés sur les figures 2a à 2d, correspondent respectivement à la composante stévensite, à la composante témoignant de l'interstratification, et à la composante talc. Ces trois composantes forment un interstratifié talc-stévensite.

| | | Position du pic, $d_{hkl}$ (Å) | Angle de diffraction (°2θ) | Intensité du pic (coups/s) | Aire du pic |
|---|---|---|---|---|---|
| R100 | Pic 1 | 12,12 | 7,290 | 622 | 1,459 |
| | Pic 2 | 10,47 | 8,440 | 1328 | 1,081 |
| | Pic 3 | 9,43 | 9,370 | 3599 | 1,055 |
| R50 | Pic 1 | 18,65 | 4,735 | 4284 | 1,487 |
| | Pic 2 | 9,70 | 9,114 | 3018 | 1,282 |
| | Pic 3 | 9,09 | 9,720 | 4533 | 0,887 |
| R25 | Pic 1 | 18,65 | 4,735 | 10778 | 1,761 |
| | Pic 2 | 9,82 | 8,999 | 2729 | 1,148 |
| | Pic 3 | 9,09 | 9,720 | 7227 | 0,943 |
| R10 | Pic 1 | 18,37 | 4,807 | 22327 | 1,860 |
| | Pic 2 | 9,41 | 9,390 | 6421 | 1,476 |
| | Pic 3 | 9,01 | 9,810 | 6662 | 0,836 |

Tableau 1

Egalement, en référence au diffractogramme RX présenté à la figure 1, une mesure de la largeur à mi-hauteur des pics correspondant aux plans (001), (020), (003) et (060), relatifs à la phase minérale non gonflante, permet d'apprécier l'effet du ratio eau/solide sur l'évolution de la cristallinité. Pour une température et une durée de traitement hydrothermal données, la cristallinité des particules d'interstratifié T.O.T.-T.O.T. gonflant augmente avec le ratio eau/solide.

C/ - PROTOCOLE GENERAL DE CONVERSION THERMIQUE DE COMPOSITIONS D'INTERSTRATIFIÉ TALC-STEVENSITE SYNTHETIQUE EN COMPOSITIONS TALQUEUSES

Une composition d'interstratifié T.O.T.-T.O.T. gonflant préparée comme précédemment enseigné, après séchage et broyage, est soumise à un traitement thermique anhydre. Pour ce faire, celle-ci est placée dans un creuset en platine puis est chauffée. On peut également utiliser un creuset en céramique ou en tout autre matériau approprié. La réaction est réalisée à basse pression, inférieure à 5 bars -notamment à la pression atmosphérique-.

1/ - Analyse et caractérisation

Les structures cristalline et lamellaire des particules d'interstratifié T.O.T.-T.O.T. gonflant et celles des particules talqueuses obtenues au cours et à l'issue de la mise en oeuvre du procédé précédemment défini ont été caractérisées par spectroscopie infrarouge et en diffraction des rayons X. Certaines seulement des données recueillies sont présentées aux figures 3, 4a, 4b, 5 et 6, et commentées ci-après.

a) Analyse en infrarouge

En infrarouge, il est connu que les bandes de vibration caractéristiques du talc naturel sont les suivantes (avec une résolution de 4 $cm^{-1}$) :

- 3678 $cm^{-1}$ : vibration de la liaison $Mg_3$-OH ;
- 1018 $cm^{-1}$ : vibration de la liaison Si-O-Si ;
- 669 $cm^{-1}$ : vibration de la liaison Mg-O-Si ;
- 7185 $cm^{-1}$ : vibration de la liaison 2ν$Mg_3$-OH.

La figure 3 présente les résultats d'analyses réalisées en moyen infrarouge en transmission sur :

- une composition d'interstratifié talc-stévensite (I.t.s.) préparée en suivant le protocole général de traitement hydrothermal précédemment exposé, dans les conditions particulières suivantes : le traitement hydrothermal est réalisé à 220°C pendant 24 heures, avec un ratio eau distillée/gel de 0,83 (200 g de composition pulvérulente pour 166 $cm^3$ d'eau),
- une première composition de talc synthétique (Ts 300°C - 5h) obtenue à partir de la composition d'interstratifié talc-stévensite (I.t.s.) précédente et avec un traitement thermique anhydre de 300°C, pendant une durée de 5 heures,
- une seconde composition de talc synthétique (Ts 500°C - 5h) obtenue à partir de la composition d'interstratifié talc-stévensite (I.t.s.) précédente et avec un traitement thermique anhydre de 500°C, pendant une durée de 5 heures.

L'acquisition des spectres infrarouges a été réalisée avec un spectromètre NICOLET 510-FTIR sur un domaine de 4000 à 400 $cm^{-1}$.

Par ailleurs, les figures 4a et 4b montrent des agrandissements des zones où se trouvent localisées les bandes de vibration à 3678 $cm^{-1}$, à 1018 $cm^{-1}$ et à 669 $cm^{-1}$.

Des mesures ont également été effectuées en réflexion diffuse dans le proche infrarouge en vue de visualiser la vibration de la liaison $Mg_3$-OH pointée à 7185 $cm^{-1}$. La figure 5 montre un agrandissement de la zone comprise entre 6000 $cm^{-1}$ à 8000 $cm^{-1}$.

L'agrandissement de la zone comprise entre 6000 $cm^{-1}$ à 8000 $cm^{-1}$ (figure 3) fait apparaître un pic à 7265 $cm^{-1}$, à proximité du pic à 7185 $cm^{-1}$ de référence. La présence de cette liaison traduit une légère hydratation du produit obtenu. Des molécules d'eau sont encore intercalées entre les feuillets du talc.

Ces résultats montrent qu'un traitement thermique anhydre permet effectivement de convertir la composition d'interstratifié talc-stévensite en une composition de talc synthétique. Cette conversion se traduit notamment par la présence des quatre bandes de vibration caractéristiques du talc, dont la finesse reflète essentiellement la cristallinité du minéral. La finesse de ces quatre bandes, et donc la cristallinité du minéral, augmente progressivement au cours du traitement thermique anhydre, et avec la durée de ce traitement (tous les résultats ne sont pas représentés sur les figures).

Néanmoins, avec un traitement thermique anhydre réalisé à une température de l'ordre de 300°C seulement, l'obtention d'un degré d'hydratation similaire à celui d'un talc naturel est longue.

Par contre avec un traitement thermique anhydre à une température de l'ordre de 500°C, la composition minérale traitée acquiert une cristallinité et un taux d'hydratation très comparables à ceux d'un talc naturel en un temps relativement court (dès 5 heures environ de traitement).

2/ - Analyses en diffraction des rayons X

En diffraction des rayons X, le talc naturel est connu pour présenter quatre pics de diffraction caractéristiques :

- pour le plan (001), un pic situé à une distance de 9,35 Å ;
- pour le plan (020), un pic situé à 4,55 Å ;
- pour le plan (003), un pic situé à 3,14 Å ;
- pour le plan (060), un pic situé à 1,52 Å.

La figure 6 présente les résultats d'analyses réalisées sur :

- la composition d'interstratifié talc-stévensite (I.t.s.) précédente,
- une première composition de talc synthétique (Ts 300°C) obtenue à partir de la composition d'interstratifié talc-stévensite précédente et avec un traitement thermique anhydre de 300°C, pendant une durée de 5 heures,
- une seconde composition de talc synthétique (Ts 550°C) obtenue à partir de la composition d'interstratifié talc-stévensite précédente et avec un traitement thermique anhydre de 550°C, pendant une durée de 5 heures.

Les diffractogrammes RX, présentés à la figure 6, ont été réalisés avec un appareil XPERT-MPD (PanAnalytical). Le pas de mesure 2θ est de 0,01° avec un temps d'accumulation de 2 sec/pas. La tension d'accélération est de 40 kV, l'intensité de 55 mA. La relation de Bragg donnant l'équidistance structurale est : $d_{hkl}=0{,}7703/\sin\theta$.

Ces analyses confirment ce qui a été observé en spectroscopie infrarouge.

Les pics caractéristiques du talc s'intensifient avec un traitement thermique anhydre aussi bien à 550°C qu'à 300°C, et cette intensité augmente avec la durée du traitement.

Après 5 heures seulement d'un traitement thermique anhydre de 550°C, les pics de diffraction caractéristiques du talc s'affinent. En particulier, le pic de diffraction du plan (001) passe d'une position à 9,64 Å à 9,50 Å ; on se rapproche fortement de la valeur de 9,35 Å caractéristique d'un talc naturel. Cet écart de valeurs peut refléter une taille très petite des particules (taille nanométrique) et/ou une légère hydratation résiduelle du talc synthétique, qui augmente la distance inter-réticulaire d(001) du fait de la présence des molécules d'eau intercalées entre les feuillets du talc. Cependant, il faut noter que cette hydratation est de moins en moins prononcée avec une durée de traitement thermique anhydre plus longue.

Une mesure de la largeur à mi-hauteur des pics des plans (001), (020), (003) et (060) montre l'évolution de la cristallinité et confirme que, pour une température de traitement supérieure à 300°C, plus le temps de synthèse augmente, plus la cristallinité du talc s'améliore (la largeur à mi-hauteur diminue avec le temps de traitement).

Les diffractogrammes RX présentés à la figure 4 font aussi apparaître la présence des pics de diffraction caractéristiques du chlorure de sodium (NaCl). La présence de ces pics traduit un lavage et un rinçage insuffisants du gel silicométallique, préalables au traitement hydrothermal. En l'occurrence, les trois compositions analysées ont été préparées avec seulement un cycle de lavage du gel silicométallique.

D/ - STRUCUTRE THEORIQUE DES PARTICULES DE STEVENSITE ET DE TALC SYNTHETIQUES OBTENUES SELON L'INVENTION

Faisant référence aux figures 7 et 8 qui en présentent de façon schématique la structure cristalline, le talc et l'interstratifié talc-stévensite obtenus conformément à l'invention, présentent une organisation microscopique en feuillets élémentaires 1 superposés. Chaque feuillet 1 présente une structure cristalline composée d'une couche d'octaèdres 4 occupés par des cations métalliques divalents, en l'espèce, $Mg^{2+}$.

Chacune de ces couches octaédriques est intercalée entre deux couches de tétraèdres 3.

Par rapport au talc, la structure cristalline de l'interstratifié talc-stévensite est caractérisée par la présence de lacunes 5 en cations métalliques au niveau de certains sites octaédriques des feuillets élémentaires 1. Ces lacunes cationiques expliquent la faible cristallinité observée notamment sur les diffractogrammes RX.

Par rapport au talc, l'interstratifié talc-stévensite se caractérise également par un empilement irrégulier des feuillets élémentaires 1 et par la présence d'espaces interfoliaires 2 au niveau desquels s'infiltrent les molécules d'eau et des cations hydratés. Ces cations infiltrés dans les espaces interfoliaires 2 permettent de compenser la perte de charges due aux lacunes 5 en cations au niveau de la phase minérale. L'édifice cristallin reste ainsi dans un état relativement neutre.

Les cations interfoliaires sont faiblement liés au reste du réseau et sont de ce fait susceptibles d'être échangés par d'autres cations. Egalement, les espaces interfoliaires 2 sont plus ou moins expansibles. A l'intérieur de ces espaces interfoliaires, des substances diverses peuvent être introduites.

Par exemple, à l'instar des smectites, des compositions d'interstratifié talc-stévensite selon l'invention présentent un intérêt particulier en agriculture. En particulier, on peut envisager d'incorporer, dans les espaces interfoliaires de leurs particules, des agents de fertilisation -en particulier des sels minéraux (potassium, azote...)-. Ces particules d'interstratifié talc-stévensite pourront alors servir de vecteurs à ces substances introduites et permettront une libération prolongée de celles-ci dans le sol.

Les tests de traitement thermique anhydre des particules d'interstratifié talc-stévensite ont conduit à une conversion de ce minéral synthétique en talc. En particulier, on observe un affinement progressif des pics de diffraction RX caractéristiques au niveau des plans (001), (020), (003) et (060) qui traduit une amélioration de la cristallinité des feuillets 1. Progressivement, les lacunes 5 sont comblées par les cations des espaces interfoliaires 2. Et, de manière concomitante, les espaces interfoliaires s'amincissent (passant de 12 Å à des valeurs de l'ordre de 9,4-9,6 Å) ; dans le plan (001), le pic de diffraction caractéristique se rapproche de la distance 9,35 Å.

## Revendications

1. Procédé de préparation d'une composition comprenant des particules minérales, dites particules d'interstratifié T.O.T.-T.O.T. gonflant, formées d'une interstratification entre :

   - au moins une phase minérale non gonflante, formée d'un empilement de feuillets élémentaires de type phyllogermanosilicate 2/1 et de formule chimique - $(Si_xGe_{1-x})_4M_3O_{10}(OH)_2$-, et
   - au moins une phase minérale gonflante, formée d'un empilement de feuillets élémentaires de type phyllogermanosilicate 2/1 et d'au moins un espace interfoliaire entre deux feuillets élémentaires consécutifs ; ladite phase

minérale gonflante ayant pour formule chimique - $(Si_xGe_{1-x})_4M_{3-\varepsilon}$ $O_{10}(OH)_2$, $(M^{2+})_{\varepsilon'}$●$nH_2O$-, dans lesdites formules chimiques :

- M désignant au moins un métal divalent et ayant pour formule $Mg_{y(1)}Co_{y(2}$ $Zn_{y(3)}Cu_{y(4)}Mn_{y(5)}Fe_{y(6)}Ni_{y(7)}Cr_{y(8)}$ ; chaque $y(i)$ représentant un nombre réel de l'intervalle [0 ; 1], et tel que

$$\sum_{i=1}^{8} y(i) = 1,$$

- x étant un nombre réel de l'intervalle [0 ; 1],
- $\varepsilon$ et $\varepsilon'$ se rapportant respectivement au déficit cationique des feuillets élémentaires de la phase gonflante, et aux cations présents dans l'(les) espace(s) interfoliaire(s),

ladite composition présentant un diffractogramme des rayons X comprenant des pics de diffraction caractéristiques suivants :

- un plan (001) situé à une distance de l'ordre de 14-15 Å, représentatif de ladite phase minérale gonflante,
- des plans représentatifs de ladite phase minérale non gonflante :
  - un plan (001) situé à une distance de l'ordre de 9,60-10,50 Å ;
  - un plan (020) situé à 4,50-4,60 Å ;
  - un plan (003) situé à 3,10-3,20 Å ;
  - un plan (060) situé à 1,50-1,55 Å,

ledit procédé étant **caractérisé en ce qu'**on réalise un traitement hydrothermal d'un gel silico/germano-métallique de formule chimique - $(Si_xGe_{1-x})_4M_3O_{11}$, $n'H_2O$-, à l'état liquide ; on réalise ledit traitement hydrothermal pendant une durée et à une température comprise entre 150°C et 300°C, choisies en fonction des caractéristiques structurelles souhaitées pour lesdites particules d'interstratifié T.O.T.-T.O.T. gonflant à préparer ; on réalise ledit traitement hydrothermal à une pression contrôlée de l'ordre de 16 bars et sous agitation ; pour une température et une durée de traitement hydrothermal déterminées, on réalise une adjonction complémentaire d'eau audit gel silico/germano-silicate de façon à ajuster le ratio eau/solide représentatif du mélange réactionnel à base de gel silico/germano-métallique à traiter, en fonction du rapport volumique - phase minérale gonflante/phase minérale non gonflante - souhaité pour les particules d'interstratifié T.O.T.-T.O.T. gonflant à préparer.

2. Procédé selon la revendication 1, **caractérisé en ce que**, à l'issue dudit traitement hydrothermal, on récupère une composition colloïdale et on soumet ladite composition colloïdale à une étape de séchage suivie d'une étape de broyage mécanique pour obtenir une composition solide comprenant des particules d'interstratifié T.O.T.-T.O.T. gonflant individualisées.

3. Procédé selon l'une des revendications 1 ou 2, **caractérisé en ce qu'**on prépare ledit gel silico/germano-métallique par une réaction de coprécipitation entre :

- une composition liquide comprenant au moins une solution saline choisie parmi : une solution de métasilicate de sodium ($Na_2OSiO_2$) et une solution de métagermanate de sodium ($Na_2OGeO_2$) ; et présentant les ratios de concentration molaire suivants :

$$\frac{[Na_2OSiO_2]}{[Na_2OSiO_2]+[Na_2OGeO_2]} = x \text{ et } \frac{[Na_2OGeO_2]}{[Na_2OSiO_2]+[Na_2OGeO_2]} = 1-x \text{ ;}$$

et

- une solution de chlorure(s) métallique(s) ($MCl_2$) comprenant au moins un chlorure de métal divalent choisi parmi : le chlorure de magnésium ($MgCl_2$), le chlorure de nickel ($NiCl_z$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; avec un ratio de concentration molaire pour chacun desdits chlorures de métal, tel que :

$$\frac{[\text{métal divalent } (i)]}{[M]_{(totale)}} = y(i)$$

- en présence d'une solution d'acide chlorhydrique.

4. Procédé selon l'une des revendications 1 à 3, **caractérisé en ce qu'**on effectue le traitement hydrothermal dudit gel silico/germano-métallique au moyen d'un autoclave.

5. Procédé selon l'une des revendications 1 à 4, **caractérisé en ce qu'**on réalise ledit traitement hydrothermal à une température de l'ordre de 220°C, pour une durée de l'ordre de 15 jours.

6. Procédé selon l'une des revendications 1 à 4, **caractérisé en ce qu'**on réalise ledit traitement hydrothermal à une température de l'ordre de 300°C, pour une durée de l'ordre de 5 heures.

7. Procédé selon l'une des revendications 1 à 6, **caractérisé en ce que** pour préparer ledit gel silico/germano-métallique de formule $(Si_xGe_{1-x})_4M_3O_{11}$, n'$H_2O$, on réalise successivement les étapes suivantes :

   - on prépare une composition acide de chlorure de métal en faisant dissoudre dans un volume d'eau une quantité appropriée d'une composition de cristaux hygroscopiques d'au moins un chlorure de métal choisi parmi : le chlorure de magnésium ($MgCl_2$), le chlorure de nickel ($NiCl_2$), le chlorure de cobalt ($CoCl_2$), le chlorure de zinc ($ZnCl_2$), le chlorure de cuivre ($CuCl_2$), le chlorure de manganèse ($MnCl_2$), le chlorure de fer ($FeCl_2$), le chlorure de chrome ($CrCl_2$) ; puis on y rajoute l'acide chlorhydrique (HCl),
   - on prépare une composition liquide en faisant dissoudre dans un volume d'eau approprié une quantité d'au moins un sel choisi parmi : le métasilicate de sodium et le métagermanate de sodium,
   - on mélange les deux compositions aqueuses dans des proportions choisies pour provoquer la formation d'un gel de coprécipitation ; les quantités utilisées des différents réactifs étant choisies pour que les ions $Na^+$ et $Cl^-$ à l'issue de la réaction de coprécipitation soient présents en quantité équimolaire.

8. Procédé selon la revendication 7, **caractérisé en ce que**, avant de réaliser le traitement hydrothermal dudit gel silico/germano-métallique, on lave celui-ci avec de l'eau pour le débarrasser du chlorure de sodium formé lors de la réaction de coprécipitation.

9. Composition comprenant des particules minérales, dites particules d'interstratifié T.O.T.-T.O.T. gonflant, formées d'une interstratification entre :

   - au moins une phase minérale non gonflante, formé d'un empilement de feuillets élémentaires de type phyllogermanosilicate 2/1 et de formule chimique - $(Si_xGe_{1-x})_4M_3O_{10}(OH)_2$-, et
   - au moins une phase minérale gonflante, formée d'un empilement de feuillets élémentaires de type phyllogermanosilicate 2/1 et d'au moins un espace interfoliaire entre deux feuillets élémentaires consécutifs ; ladite phase minérale gonflante ayant pour formule chimique - $(Si_xGe_{1-x})_4M_{3-\varepsilon}O_{10}(OH)_2$, $(M^{2+})_{\varepsilon'}$●$nH_2O$-,

   dans lesdites formules chimiques :

     - M désignant au moins un métal divalent et ayant pour formule $Mg_{y(1)}Co_{y(2}$ $Zn_{y(3)}Cu_{y(4)}Mn_{y(5)}Fe_{y(6)}Ni_{y(7)}Cr_{y(8)}$ ; chaque *y(i)* représentant un nombre réel de l'intervalle [0 ; 1], et tel que

     $$\sum_{i=1}^{8} y(i) = 1,$$

     - x étant un nombre réel de l'intervalle [0 ; 1],
     - $\varepsilon$ et $\varepsilon'$ se rapportant respectivement au déficit cationique des feuillets élémentaires de la phase gonflante, et aux cations présents dans l'(les) espace(s) interfoliaire(s),

     ladite composition étant **caractérisée en ce qu'**une analyse en diffraction des rayons X desdites particules d'interstratifié T.O.T.-T.O.T. gonflant conduit à l'obtention d'un diffractogramme présentant des pics de diffraction caractéristiques suivants :

       - un plan (001) situé à une distance de l'ordre de 14-15 Å, représentatif de ladite phase minérale gonflante,

- des plans représentatifs de ladite phase minérale non gonflante :

  - un plan (001) situé à une distance de l'ordre de 9,60-10,50 Å ;
  - un plan (020) situé à 4,50-4,60 Å ;
  - un plan (003) situé à 3,10-3,20 Å ;
  - un plan (060) situé à 1,50-1,55 Å.

**10.** Composition selon la revendication 9, **caractérisée en ce que** lesdites particules d'interstratifié T.O.T.-T.O.T. gonflant sont présentes sous une forme individualisée et pulvérulente.

**11.** Composition selon la revendication 9, **caractérisée en ce que** lesdites particules d'interstratifié T.O.T.-T.O.T. gonflant sont agrégées les unes aux autres en agrégats.

**12.** Procédé de préparation d'une composition, dite composition talqueuse, comprenant des particules minérales silico/germano-métalliques synthétiques ayant une structure cristalline et lamellaire, et une formule $-(Si_xGe_{1-x})_4M_3O_{10}(OH)_2-$,

- M désignant au moins un métal divalent et ayant pour formule chimique $Mg_{y(1)}Co_{y(2}Zn_{y(3)}Cu_{y(4)}Mn_{y(5)}Fe_{y(6)}Ni_{y(7)}Cr_{y(8)}$ ; chaque *y(i)* représentant un nombre réel de l'intervalle [0 ; 1], et tel que

$$\sum_{i=1}^{8} y(i) = 1,$$

- x étant un nombre réel de l'intervalle [0 ; 1], ledit procédé étant **caractérisé en ce qu'**on soumet une composition comprenant des particules d'interstratifié T.O.T.-T.O.T. gonflant, conforme à l'une des revendications 9 à 11, à un traitement thermique anhydre effectué à une pression inférieure à 5 bars, pendant une durée et avec une température de traitement supérieure à 300°C, choisies de façon à obtenir une cristallinité et une stabilité souhaitées pour lesdites particules minérales silico/germano-métalliques synthétiques à préparer.

**13.** Procédé selon la revendication 12, **caractérisé en ce qu'**on réalise ledit traitement thermique anhydre à une température de l'ordre de 500-550°C.

**14.** Procédé selon l'une des revendications 12 ou 13, **caractérisé en ce qu'**on réalise ledit traitement thermique anhydre à l'air ambiant, à l'intérieur d'un creuset.

**Patentansprüche**

**1.** Verfahren zum Herstellen einer Zusammensetzung, welche Mineralpartikel umfasst, die quellende T.O.T.-T.O.T. Zwischenschicht-Partikel genannt werden, gebildet aus einer Zwischenschichtung zwischen:

- zumindest einer nicht quellenden mineralischen Phase, die durch eine Stapelung von elementaren Plättchen des Typs Phyllogermanosilikat 2/1 und der chemischen Formel $-(Si_xGe_{1-x})_4M_3O_{10}(OH)_2-$ gebildet wird, und
- zumindest einer quellenden mineralen Phase, die durch eine Stapelung von elementaren Plättchen des Typs Phyllogermanosilikat 2/1 und zumindest einem Zwischenraum zwischen den Schichten zwischen zwei aufeinanderfolgenden Plättchen gebildet wird; wobei die besagte quellende mineralische Phase die chemische Formel $-(Si_xGe_{1-x})_4M_{3-\varepsilon}O_{10}(OH)_2, (M^{2+})_{\varepsilon'}{}^*nH_2O-$ hat,

wobei in den besagten chemischen Formeln:

- M zumindest ein zweiwertiges Metall bezeichnet, mit der Formel $Mg_{y(1)}Co_{y(2}Zn_{y(3)}Cu_{y(4)}Mn_{y(5)}Fe_{y(6)}Ni_{y(7)}Cr_{y(8)}$ ;

wobei jedes *y(i)* eine reelle Zahl des Intervalls [0;1] ist, wie $\sum_{i=1}^{8} y(i) = 1$ ,

- x eine reelle Zahl des Intervalls [0;1] ist,
- ε und ε' sich jeweils auf das kationische Defizit der elementaren Plättchen der quellenden Phase und auf die Kationen beziehen, die im (in den) Zwischenraum (-räumen) zwischen den Schichten vorhanden sind,

wobei die besagte Zusammensetzung ein Diffraktogramm der Röntgenstrahlen darstellt, das folgende charakteristische Diffraktionsspitzen aufweist:

- eine Ebene (001), die sich in einem Abstand in der Größenordnung von 14-15 Å befindet, repräsentativ für die besagte quellende mineralische Phase,
- repräsentative Ebenen für die besagte nicht quellende mineralische Phase:

-- eine Ebene (001), die sich in einem Abstand in der Größenordnung von 9,60-10,50 Å befindet;
-- eine Ebene (002), die sich bei 4,50-4,60 Å befindet;
-- eine Ebene (003), die sich bei 3,10-3,20 Å befindet;
-- eine Ebene (060), die sich bei 1,50-1,55 Å befindet,
wobei das besagte Verfahren **dadurch gekennzeichnet ist, dass** eine hydrothermale Behandlung eines Silizium-/Germanium-metallhaltigen Gels der Formel - $(Si_xGe_{1-x})_4M_3O_{11}$, $n'H_2O$- im flüssigen Zustand durchgeführt wird; die hydrothermale Behandlung während eines Zeitraums und bei einer Temperatur zwischen 150 °C und 300 °C durchgeführt wird, ausgewählt je nach den strukturellen Merkmalen, die für die quellenden T.O.T.-T.O.T. Zwischenschicht-Partikel, die hergestellt werden sollen, gewünscht werden; man die besagte hydrothermale Behandlung bei einem kontrollierten Druck in der Größenordnung von 16 bar und unter Rühren durchführt; man bei einer bestimmten Temperatur und einem bestimmten Zeitraum der hydrothermalen Behandlung eine ergänzende Beigabe von Wasser zum besagten Silizium-/Germaniumsilikat-Gel durchführt, um das repräsentative Verhältnis Wasser/Feststoff für das zu bearbeitende Reaktionsgemisch basierend auf Silizium-/Germaniummetallhaltigem Gel anzupassen, in Abhängigkeit vom geswünschten Volumenverhältnis - quellende mineralische Phase/ nicht quellende mineralische Phase -, das für die quellenden T.O.T.-T.O.T. Zwischenschicht-Partikel, die hergestellt werden sollen, gewünscht wird.

2. Verfahren nach Anspruch 1, **dadurch gekennzeichnet, dass** man nach der besagten hydrothermalen Behandlung eine kolloidale Zusammensetzung erhält, und man die besagte kolloidale Zusammensetzung einem Schritt des Trocknens unterzieht, gefolgt von einem Schritt des mechanischen Mahlens, um eine solide Verbindung zu erhalten, welche individualisierte quellende T.O.T.-T.O.T. Zwischenschicht-Partikel umfasst.

3. Verfahren nach einem der Ansprüche 1 oder 2, **dadurch gekennzeichnet, dass** das Silizium-/Germaniummetallhaltige Gel durch eine Co-Präzipitationsreaktion zwischen:

- einer flüssigen Zusammensetzung, die zumindest eine Salzlösung umfasst, ausgewählt aus: einer Natriummetasilikat-Lösung ($Na_2OSiO_2$) und einer Natriummetagermanat-Lösung ($Na_2OGeO_2$); und die die folgenden molaren Konzentrationsverhältnisse aufweist:

$$\frac{[Na_2OSiO_2]}{[Na_2OSiO_2]+[Na_2OGeO_2]}=x \quad \text{und} \quad \frac{[Na_2OGeO_2]}{[Na_2OSiO_2]+[Na_2OGeO_2]}=1-x \;;$$

und
- einer Lösung aus Metallchlorid(en) ($MCl_2$), zumindest ein zweiwertiges Metallchlorid umfassend, ausgewählt aus: Magnesiumchlorid ($MgCl_2$), Nickelchlorid ($NiCl_2$), Kobaltchlorid ($CoCl_2$), Zinkchlorid ($ZnCl_2$), Kupferchlorid ($CuCl_2$), Maganchlorid ($MnCl_2$), Eisenchlorid ($FeCl_2$), Chromchlorid ($CrCl_2$); mit einem molaren Konzentrationsverhältnis für jedes der besagten Metallchloride, wie:

$$\frac{[\text{métal divalent } (i)]}{[M]_{(\text{totale})}}=y(i)$$

- im Beisein einer Salzsäurelösung hergestellt wird.

4. Verfahren nach einem der Ansprüche 1 bis 3, **dadurch gekennzeichnet, dass** die hydrothermale Behandlung des Silizium-/Germanium-metallhaltigen Gels mit Hilfe eines Autoklavs durchgeführt wird.

5. Verfahren nach einem der Ansprüche 1 bis 4, **dadurch gekennzeichnet, dass** die besagte hydrothermale Behandlung bei einer Temperatur in der Größenordnung von 220°C in einem Zeitraum in der Größenordnung von 15 Tagen durchgeführt wird.

6. Verfahren nach einem der Ansprüche 1 bis 4, **dadurch gekennzeichnet, dass** die besagte hydrothermale Behandlung bei einer Temperatur in der Größenordnung von 300°C in einem Zeitraum in der Größenordnung von 5 Stunden durchgeführt wird.

7. Verfahren nach einem der Ansprüche 1 bis 6, **dadurch gekennzeichnet, dass** zur Herstellung des Silizium-/Germanium-metallhaltigen Gels der Formel $(Si_xGe_{1-x})_4M_3O_{11}$, $n'H_2O$ nacheinander die folgenden Schritte durchgeführt werden:

- Herstellen einer sauren Metallchlorid-Zusammensetzung durch die Auflösung in einem Wasservolumen einer geeigneten Menge einer Zusammensetzung von hygroskopischen Kristallen von zumindest einem Metallchlorid, ausgewählt aus: Magnesiumchlorid ($MgCl_2$), Nickelchlorid ($NiCl_2$), Kobaltchlorid ($CoCl_2$), Zinkchlorid ($ZnCl_2$), Kupferchlorid ($CuCl_2$), Manganchlorid ($MnCl_2$), Eisenchlorid ($FeCl_2$), Chromchlorid ($CrCl_2$); danach wird dieser Hydrochlorsäure (HCl) beigegeben,
- Herstellen einer flüssigen Zusammensetzung durch die Auflösung in einem geeigneten Wasservolumen einer Menge von zumindest einem Salz, ausgewählt aus: Natriummetasilikat und Natriummetagermanat,
- Mischen der beiden wässrigen Zusammensetzungen in ausgewählten Verhältnissen, um die Bildung eines Co-Präzipitationsgels zu bewirken; wobei die verwendeten Mengen der verschiedenen Reagenzien ausgewählt werden, damit die $Na^+$ und $Cl^-$ Ionen nach der Co-Präzipitationsreaktion in einer äquimolaren Menge vorhanden sind.

8. Verfahren nach Anspruch 7, **dadurch gekennzeichnet, dass** man vor der Durchführung der hydrothermalen Behandlung des besagten Silizium-/Germanium-metallhaltigen Gels, dieses mit Wasser wäscht, um es vom Natriumchlorid zu befreien, das bei der Co-Präzipitationsreaktion gebildet wird.

9. Zusammensetzung, Mineralpartikel umfassend, die quellende T.O.T.-T.O.T. Zwischenschicht-Partikel genannt werden, gebildet aus einer Zwischenschichtung zwischen:

- zumindest einer nicht quellenden mineralischen Phase, die durch eine Stapelung von elementaren Plättchen des Typs Phyllogermanosilikat 2/1 und der chemischen Formel - $(Si_xGe_{1-x})_4M_3O_{10}(OH)_2$ - gebildet wird, und
- zumindest einer quellenden mineralen Phase, die durch eine Stapelung von elementaren Plättchen des Typs Phyllogermanosilikat 2/1 und zumindest einem Zwischenraum zwischen den Schichten zwischen zwei aufeinanderfolgenden Plättchen gebildet wird; wobei die besagte quellende mineralische Phase die chemische Formel - $(Si_xGe_{1-x})_4M_{3-\varepsilon}O_{10}(OH)_2$, $(M^{2+})_{\varepsilon'}$*$nH_2O$ - hat,
wobei in den besagten chemischen Formeln:

- M zumindest ein zweiwertiges Metall bezeichnet, mit der Formel $Mg_{y(1)}Co_{y(2}Zn_{y(3)}Cu_{y(4)}Mn_{y(5)}Fe_{y(6)}Ni_{y(7)}Cr_{y(8)}$ ; wobei jedes $y(i)$ eine reelle Zahl des Intervalls [0;1] ist, wie

$$\sum_{i=1}^{8} y(i) = 1,$$

- x eine reelle Zahl des Intervalls [0;1] ist,
- ε und ε' sich jeweils auf das kationische Defizit der elementaren Plättchen der quellenden Phase und auf die Kationen beziehen, die im (in den) Zwischenraum (-räumen) zwischen den Schichten vorhanden sind,
wobei die besagte Zusammensetzung **dadurch gekennzeichnet ist, dass** eine Diffraktionsanalyse der Röntgenstrahlen der besagten quellenden T.O.T.-T.O.T. Zwischenschicht-Partikel zum Erhalt eines Diffraktogramms führt, welches folgende charakteristische Diffraktionsspitzen aufweist:

- eine Ebene (001), die sich in einem Abstand in der Größenordnung von 14-15 Å befindet, repräsentativ für die besagte quellende mineralische Phase,
- repräsentative Ebenen für die besagte nicht quellende mineralische Phase:

-- eine Ebene (001), die sich in einem Abstand in der Größenordnung von 9,60-10,50 Å befindet;
-- eine Ebene (002), die sich bei 4,50-4,60 Å befindet;
-- eine Ebene (003), die sich bei 3,10-3,20 Å befindet;

-- eine Ebene (060), die sich bei 1,50-1,55 Å befindet.

**10.** Zusammensetzung nach Anspruch 9, **dadurch gekennzeichnet, dass** die besagten quellenden T.O.T.-T.O.T. Zwischenschicht-Partikel in individualisierter und pulvriger Form vorhanden sind.

**11.** Zusammensetzung nach Anspruch 9, **dadurch gekennzeichnet, dass** die besagten quellenden T.O.T.-T.O.T. Zwischenschicht-Partikel eine miteinander agglomerierte Form aufweisen und Aggregate bilden.

**12.** Verfahren zur Herstellung einer Zusammensetzung, die Talkzusammensetzung genannt wird, Silizium-/Germanium-metallhaltige synthetische Mineralpartikel mit einer Kristall- und Lamellenstruktur und einer Formel -$(Si_xGe_{1-x})_4M_3O_{10}(OH)_2$-umfassend,

- wobei M zumindest ein zweiwertiges Metall bezeichnet und die Formel $Mg_{y(1)}Co_{y(2}Zn_{y(3)}Cu_{y(4)}Mn_{y(5)}Fe_{y(6)}Ni_{y(7)}Cr_{y(8)}$ ; aufweist; wobei jedes *y(i)* eine reelle Zahl des Intervalls [0;1] ist, wie $\sum_{i=1}^{8} y(i) = 1$ ,
- wobei x eine reelle Zahl des Intervalls [0;1] ist,

wobei das besagte Verfahren **dadurch gekennzeichnet ist, dass** man die quellende T.O.T.-T.O.T. Zwischendschicht-Partikel umfassende Zusammensetzung nach einem der Ansprüche 9 bis 11 einer wasserfreien thermischen Behandlung unterzieht, die bei einem Druck von weniger als 5 bar und in einem Zeitraum und bei einer Temperatur von über 300°C durchgeführt wird, welche ausgewählt werden, um eine gewünschte Kristallinität und Stabilität für die besagten Silizium-/Germanium-metallhaltigen synthetischen Mineralpartikel zu erhalten, die herzustellen sind.

**13.** Verfahren nach Anspruch 12, **dadurch gekennzeichnet, dass** man die besagte wasserfreie thermische Behandlung bei einer Temperatur in der Größenorndung von 500-550°C durchführt.

**14.** Verfahren nach einem der Ansprüche 12 oder 13, **dadurch gekennzeichnet, dass** man die besagte wasserfreie thermische Behandlung unter Raumluftbedingungen im Inneren eines Tiegels durchführt.

## Claims

**1.** Method for preparing a composition comprising mineral particles, named swelling TOT-TOT interlayer particles, formed by interlayering between:

- at least one non-swelling mineral phase formed by a stack of elementary laminae of the 2/1 phyllogermano silicate type and having the chemical formula - $(Si_xGe_{1-x})_4M_3O_{10}(OH)_2$ - and
- at least one swelling mineral phase formed by a stack of elementary laminae of the 2/1 phyllogermanosilicate type and at least one interfoliar space between two consecutive elementary laminae; said swelling mineral phase having the chemical formula
- $(Si_x Ge_{1-x})_4M_{3-\varepsilon}O_{10}(OH)_2$, $(M^{2+})\varepsilon'$●$nH_2O$ -,

in said chemical formulae:

- M denotes at least one divalent metal and has the formula $Mg_{y(1)}Co_{y(2)}Zn_{y(3)}Cu_{y(4)}Mn_{y(5)}Fe_{y(6)}Ni_{y(7)}Cr_{y(8)}$ ; each *y(i)* representing a real number of the interval [0; 1], such that $\sum_{i=1}^{8} y(i) = 1$,
- *x* is a real number of the interval [0; 1],
- $\varepsilon$ and $\varepsilon'$ relate to the cation deficit of the elementary laminae of the swelling phase and to the cations present in the interfoliar space(s), respectively,

said composition having an X-ray diffractogram comprising the following characteristic diffraction peaks:

- a plane (001) located at a distance of 14-15 Å, representing said swelling mineral phase,
- planes representing said non-swelling mineral phase:

- a plane (001) located at a distance of 9.60-10.50 Å;
- a plane (020) located at 4.50-4.60 Å;
- a plane (003) located at 3.10-3.20 Å;
- a plane (060) located at 1.50-1.55 Å,

**characterised in that** said method is subjecting a gel containing silicon, germanium and metal M and having the chemical formula - $(Si_xGe_{1-x})_4M_3O_{11}$,n'$H_2O$ -, in the liquid state, to a hydrothermal treatment; said hydrothermal treatment is carried out for a period of time and at a temperature, of from 150°C to 300°C, which are chosen according to the structural characteristics desired for said swelling TOT-TOT interlayer particles that are to be prepared; said hydrothermal treatment is carried out at a controlled pressure of the order of 16 bar and with stirring; for a given hydrothermal treatment temperature and time, additional water is added to said gel containing silicon, germanium and silicate in order to adjust the water/solid ratio representative of the reaction mixture based on gel containing silicon, germanium and metal M that is to be treated, in dependence on the ratio by volume - swelling mineral phase/non-swelling mineral phase - desired for the swelling TOT-TOT interlayer particles that are to be prepared.

2. A method according to claim 1, **characterised in that**, at the end of said hydrothermal treatment, a colloidal composition is recovered and said colloidal composition is subjected to a drying step followed by a step of mechanical grinding to give a solid composition comprising individualised swelling TOT-TOT interlayer particles.

3. A method according to one of claims 1 or 2, **characterised in that** said gel containing silicon, germanium and metal M is prepared by a coprecipitation reaction between:

   - a liquid composition comprising at least one saline solution selected from: a sodium metasilicate $Na_2OSiO_2$ solution and a sodium metagermanate $Na_2OGeO_2$ solution and having the following molar concentration ratios:

$$\frac{[Na_2OSiO_2]}{[Na_2OSiO_2] + [Na_2OGeO_2]} = x \text{ and } \frac{[Na_2OGeO_2]}{[Na_2OSiO_2] + [Na_2OGeO_2]} = 1 - x;$$

   - a solution of metal chloride(s) $MCl_2$ comprising at least one divalent metal chloride selected from: magnesium chloride $MgCl_2$, nickel chloride $NiCl_2$, cobalt chloride $CoCl_2$, zinc chloride $ZnCl_2$, copper chloride $CuCl_2$, manganese chloride $MnCl_2$, iron chloride $FeCl_2$, chromium chloride $CrCl_2$; with a molar concentration ratio for each of said metal chlorides such that:

$$\frac{[\text{divalent metal}_{(i)}]}{[M]_{(total)}} = y(i)$$

   - in the presence of a hydrochloric acid solution.

4. A method according to any one of claims 1 to 3, **characterised in that** the hydrothermal treatment of said gel containing silicon, germanium and metal M is carried out by means of an autoclave.

5. A method according to any one of claims 1 to 4, **characterised in that** said hydrothermal treatment is carried out at a temperature of the order of 220°C for a period of the order of 15 days.

6. A method according to any one of claims 1 to 4, **characterised in that** said hydrothermal treatment is carried out at a temperature of the order of 300°C for a period of the order of 5 hours.

7. A method according to any one of claims 1 to 6, **characterised in that**, in order to prepare said gel containing silicon, germanium and metal M of formula $(Si_xGe_{1-x})_4M_3O_{11}$, n'$H_2O$, the following steps are carried out in succession:

   - an acidic composition of metal chloride is prepared by dissolving, in one volume of water, an appropriate amount of a composition of hygroscopic crystals of at least one metal chloride selected from: magnesium chloride $MgCl_2$, nickel chloride $NiCl_2$, cobalt chloride $CoCl_2$, zinc chloride $ZnCl_2$, copper chloride $CuCl_2$, manganese

chloride $MnCl_2$, iron chloride $FeCl_2$, chromium chloride $CrCl_2$; then hydrochloric acid HCl is added thereto;
- a liquid composition is prepared by dissolving, in an appropriate volume of water, an amount of at least one salt selected from: sodium metasilicate and sodium metagermanate;
- the two aqueous compositions are mixed in proportions chosen to cause the formation of a coprecipitation gel; the amounts of the various reagents that are employed being chosen so that the $Na^+$ and $Cl^-$ ions are present in equimolar amounts at the end of the coprecipitation reaction.

**8.** A method according to claim 7, **characterised in that**, before the hydrothermal treatment of said gel containing silicon, germanium and metal is carried out, said gel is washed with water in order to remove therefrom the sodium chloride formed in the coprecipitation reaction.

**9.** Composition comprising mineral particles, that is swelling TOT-TOT interlayer particles, formed by interlayering between:

- at least one non-swelling mineral phase formed by a stack of elementary laminae of the 2/1 phyllogermanosilicate type and having the chemical formula - $(Si_xGe_{1-x})_4M_3O_{10}(OH)_2$ - and
- at least one swelling mineral phase formed by a stack of elementary laminae of the 2/1 phyllogermanosilicate type and at least one interfoliar space between two consecutive elementary laminae; said swelling mineral phase having the chemical formula - $(Si_x Ge_{1-x})_4M_{3-\varepsilon}O_{10}(OH)_2$, $(M^{2+})\varepsilon'$●$nH_2O$ -,
in said chemical formulae:

- M denotes at least one divalent metal and has the formula $Mg_{y(1)}Co_{y(2)}Zn_{y(3)}Cu_{y(4)}Mn_{y(5)}Fe_{y(6)}Ni_{y(7)}Cr_{y(8)}$ ; each *y(i)* representing a real number of the interval [0; 1], such that $\sum_{i=1}^{8} y(i) = 1$,
- *x* is a real number of the interval [0; 1],
- $\varepsilon$ and $\varepsilon'$ relate to the cation deficit of the elementary laminae of the swelling phase and to the cations present in the interfoliar space(s), respectively,
said composition being **characterised in that** an X-ray diffraction analysis of said swelling TOT-TOT interlayer particles yields a diffractogram having the following characteristic diffraction peaks:

- a plane (001) located at a distance of the order of 14-15 Å, representing said swelling mineral phase,
- planes representing said non-swelling mineral phase:

- a plane (001) located at a distance of 9.60-10.50 Å;
- a plane (020) located at 4.50-4.60 Å;
- a plane (003) located at 3.10-3.20 Å;
- a plane (060) located at 1.50-1.55 Å,

**10.** A composition according to claim 9, **characterised in that** said swelling TOT-TOT interlayer particles are present in individualised and pulverulent form.

**11.** A composition according to claim 9, **characterised in that** said swelling TOT-TOT interlayer particles are combined with one another to form aggregates.

**12.** Method for preparing a composition, named talcose composition, comprising synthetic mineral particles which contain silicon, germanium and metal M, have a crystalline and lamellar structure, and are of formula

- $(Si_xGe_{1-x})_4M_3O_{10}(OH)_2$-,
- M denoting at least one divalent metal and having the chemical formula $Mg_{y(1)}Co_{y(2)}Zn_{y(3)}Cu_{y(4)}Mn_{y(5)}Fe_{y(6)}Ni_{y(7)}Cr_{y(8)}$ ; each *y(i)* representing a real number of the interval [0; 1], such that $\sum_{i=1}^{8} y(i) = 1$,
- x being a real number of the interval [0; 1],
**characterised in that** said process is subjecting a composition comprising swelling TOT-TOT interlayer particles according to any one of claims 9 to 11 to an anhydrous thermal treatment which is carried out at a pressure of

less than 5 bar for a period and at a treatment temperature, greater than 300°C, which are chosen in order to obtain the crystallinity and stability desired for said synthetic mineral particles containing silicon, germanium and metal that are to be prepared.

**13.** A method according to claim 12, **characterised in that** said anhydrous thermal treatment is carried out at a temperature of from 500 to 550°C.

**14.** A method according to one of claims 12 or 13, **characterised in that** said anhydrous thermal treatment is carried out in ambient air, inside a crucible.

Figure 1

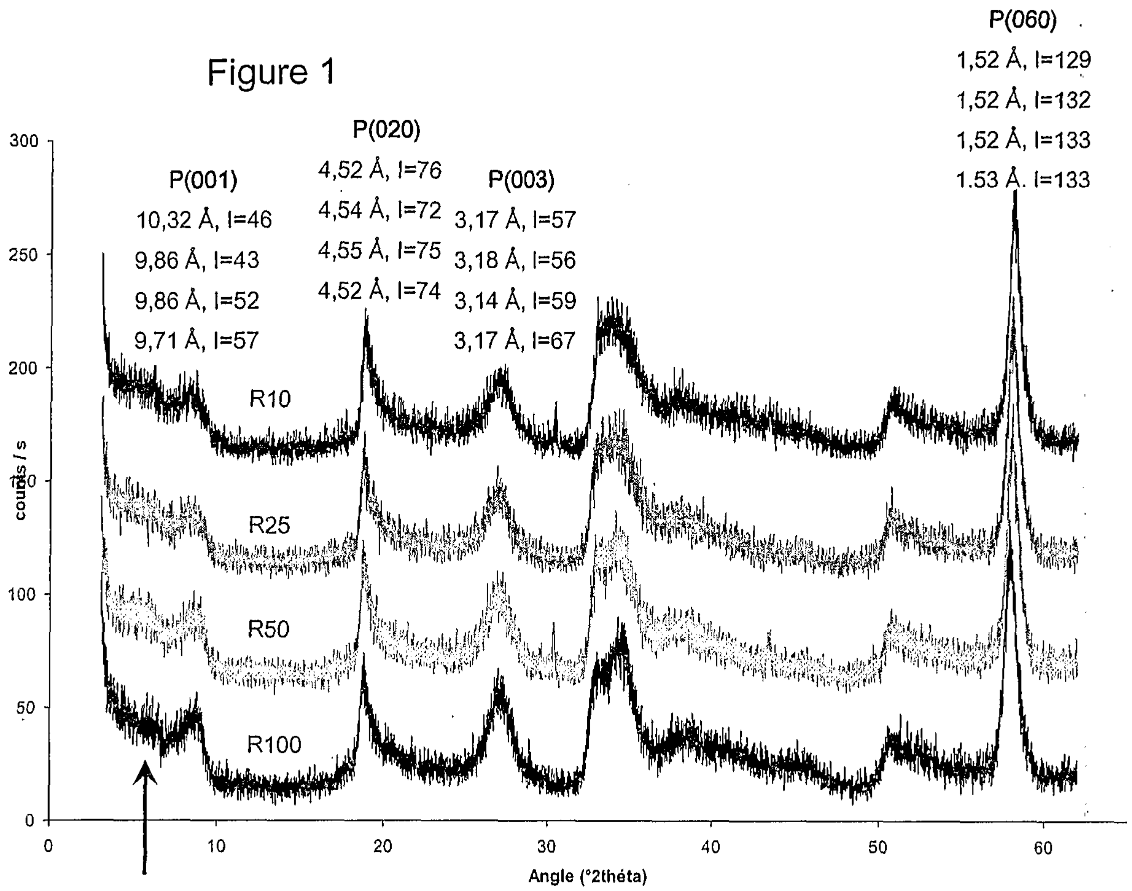


Figure 2a

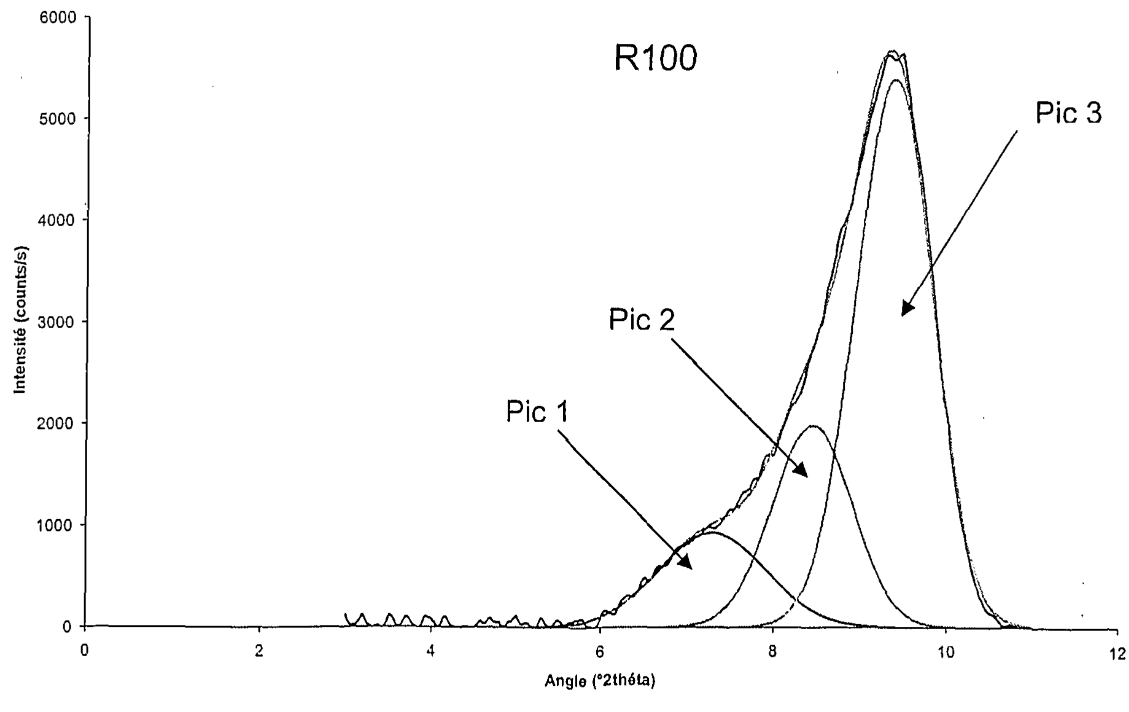

Figure 2b

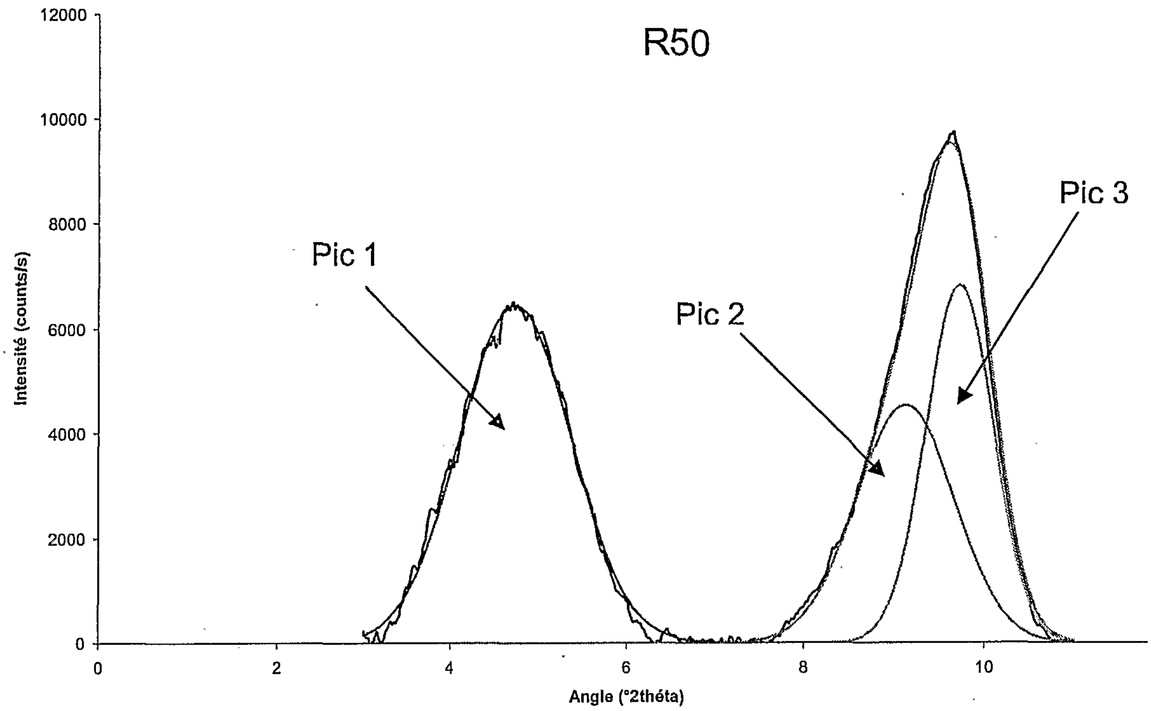


Figure 2c

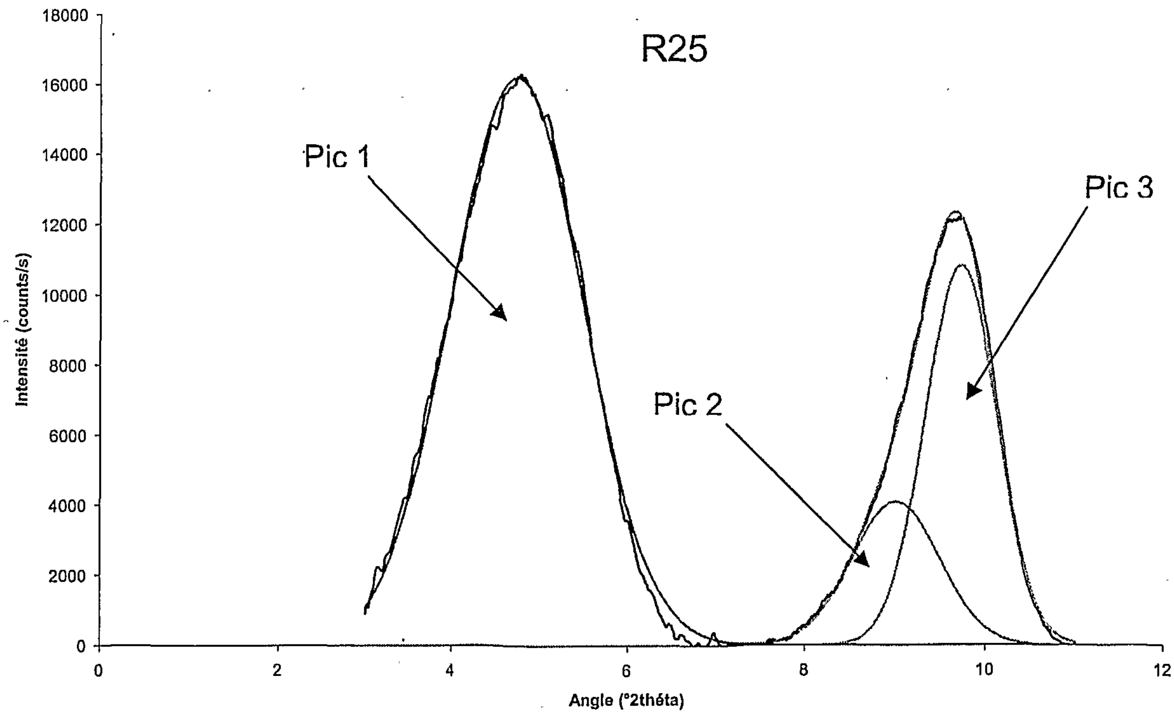

Figure 2d

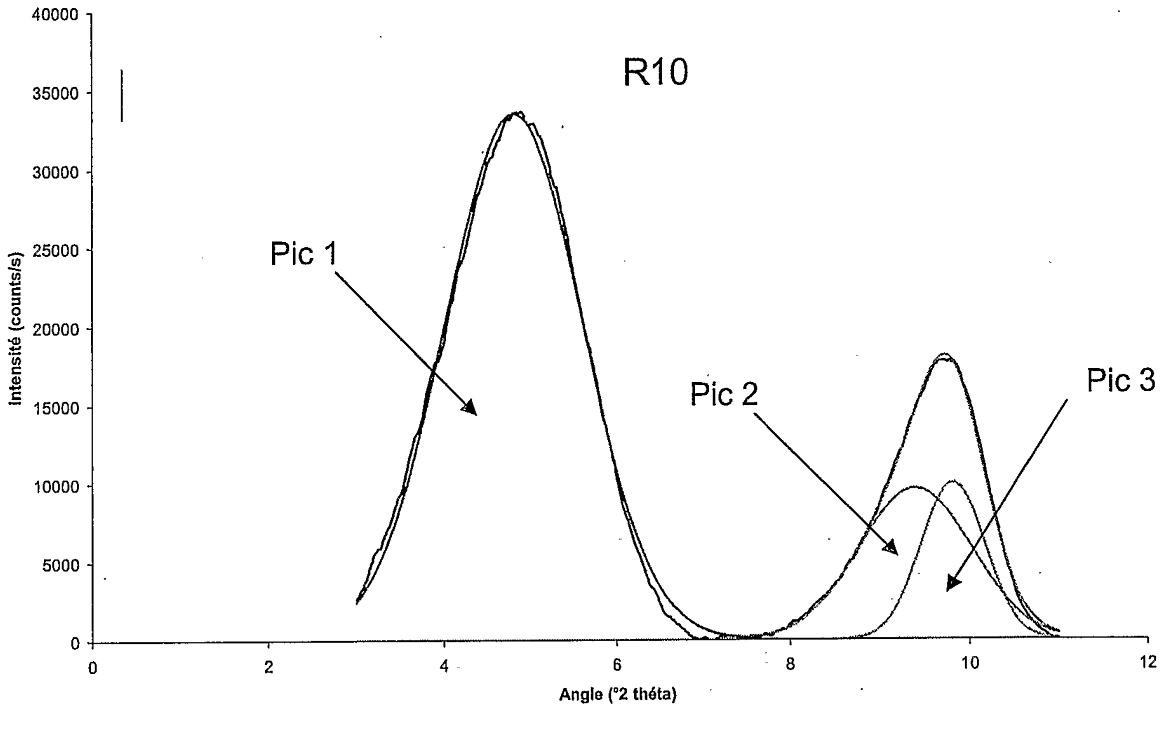
R10
Pic 1
Pic 2
Pic 3
40000
35000
30000
25000
20000
15000
10000
5000
0
Intensité (counts/s)
0
2
4
6
8
10
12
Angle (°2 théta)

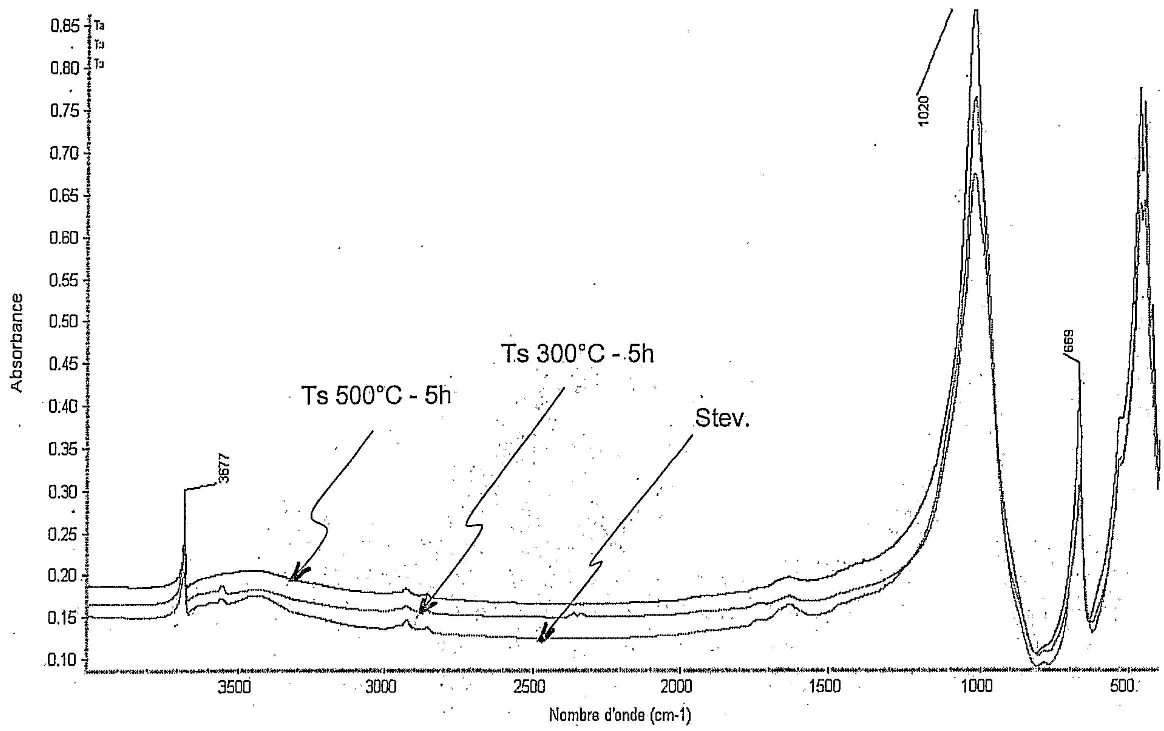


Figure 3

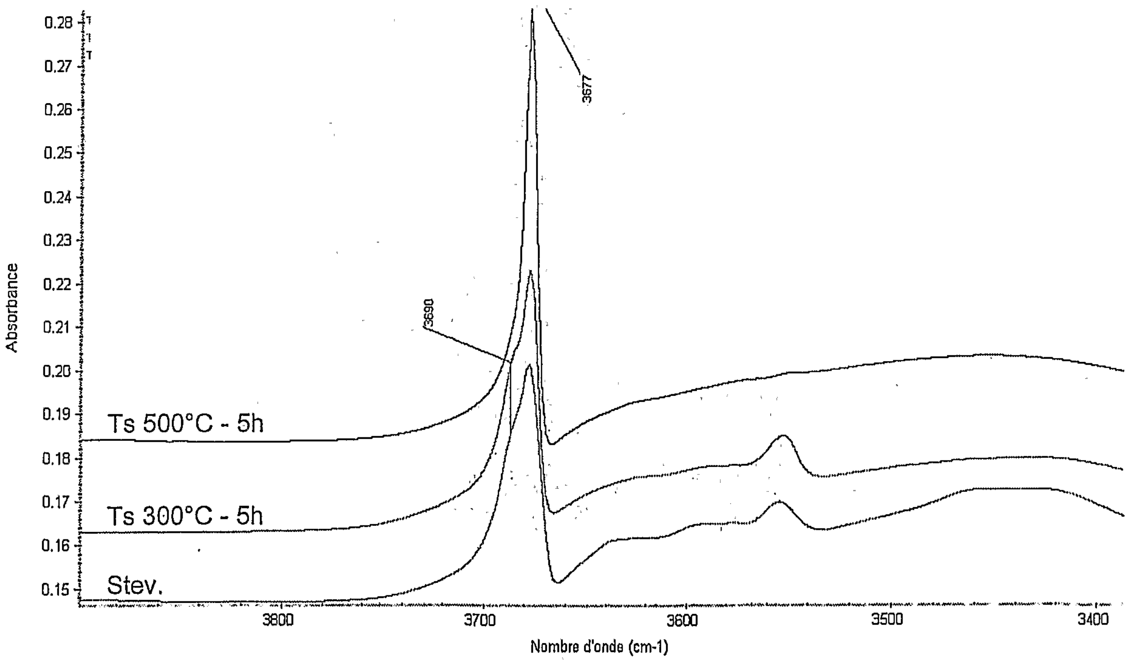


Figure 4a

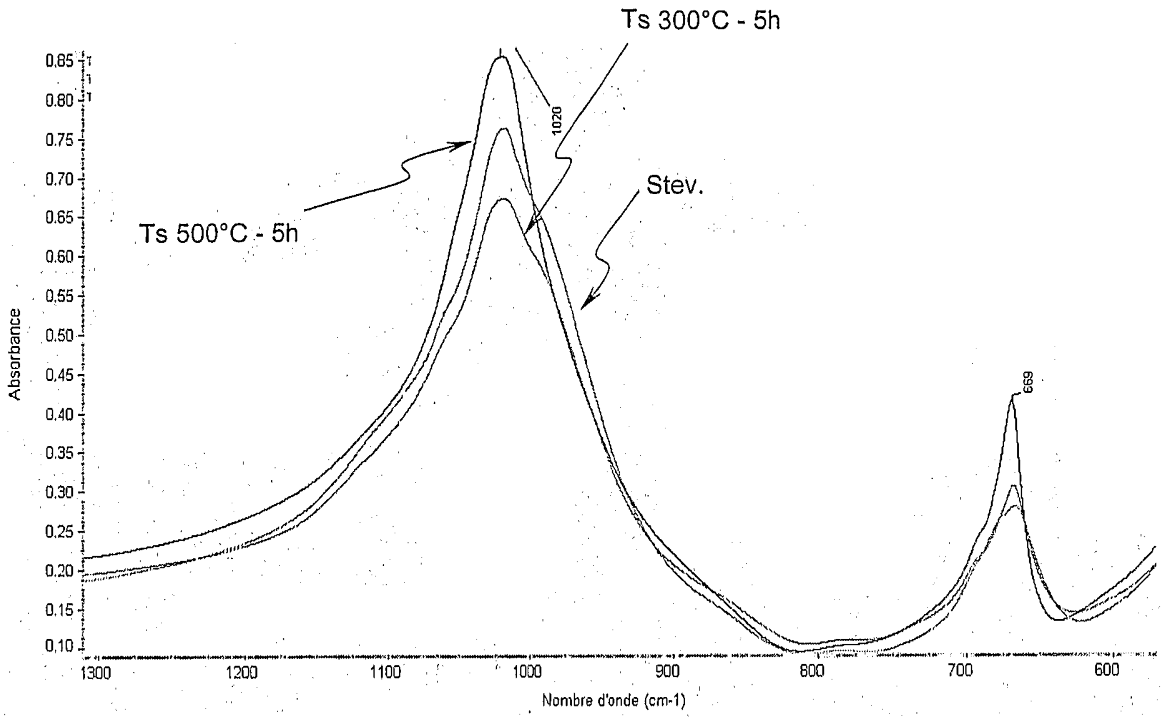


Figure 4b

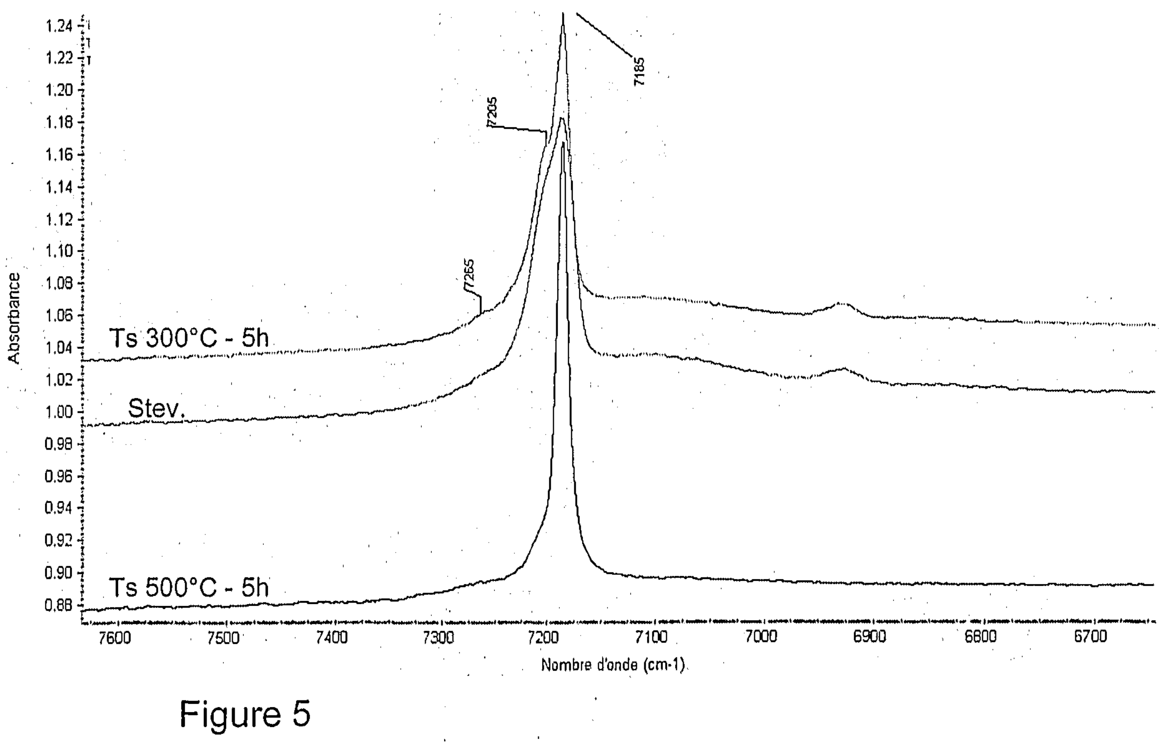


Figure 5

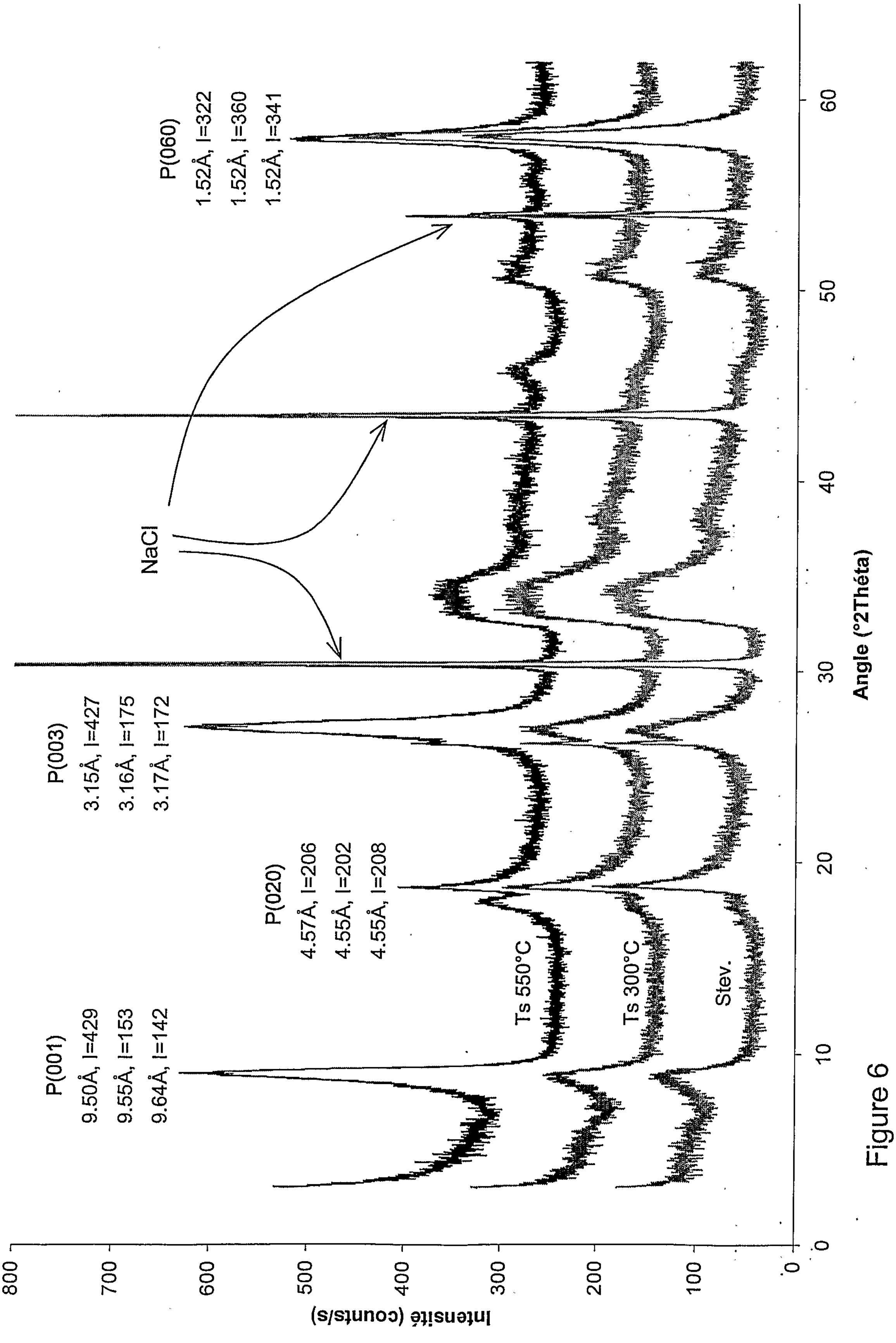
P(001)
9.50Å, I=429
9.55Å, I=153
9.64Å, I=142
P(020)
4.57Å, I=206
4.55Å, I=202
4.55Å, I=208
P(003)
3.15Å, I=427
3.16Å, I=175
3.17Å, I=172
NaCl
P(060)
1.52Å, I=322
1.52Å, I=360
1.52Å, I=341
Ts 550°C
Ts 300°C
Stev.
Intensité (counts/s)
Angle (°2Théta)
0
100
200
300
400
500
600
700
800
0
10
20
30
40
50
60

Figure 6

Figure 7

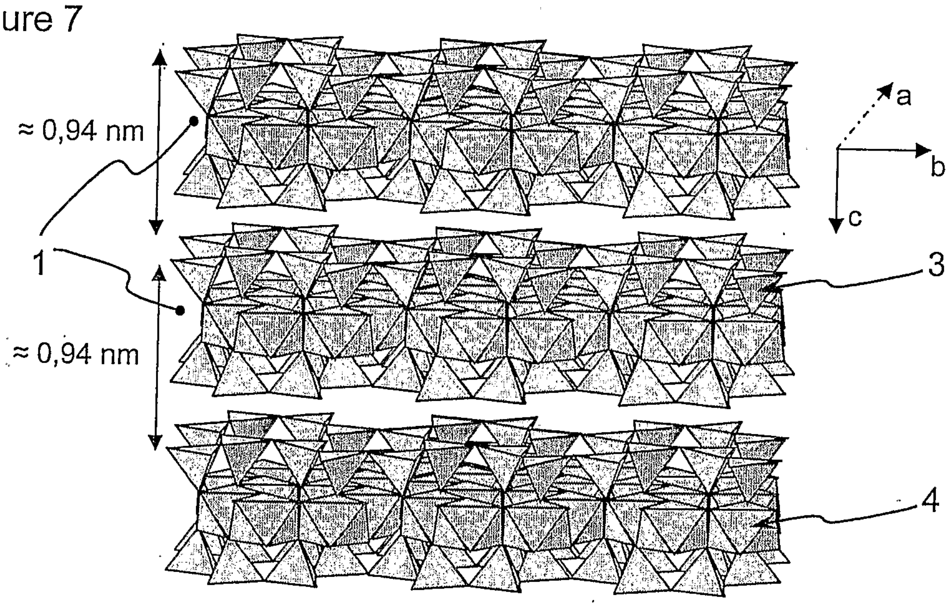


Figure 8

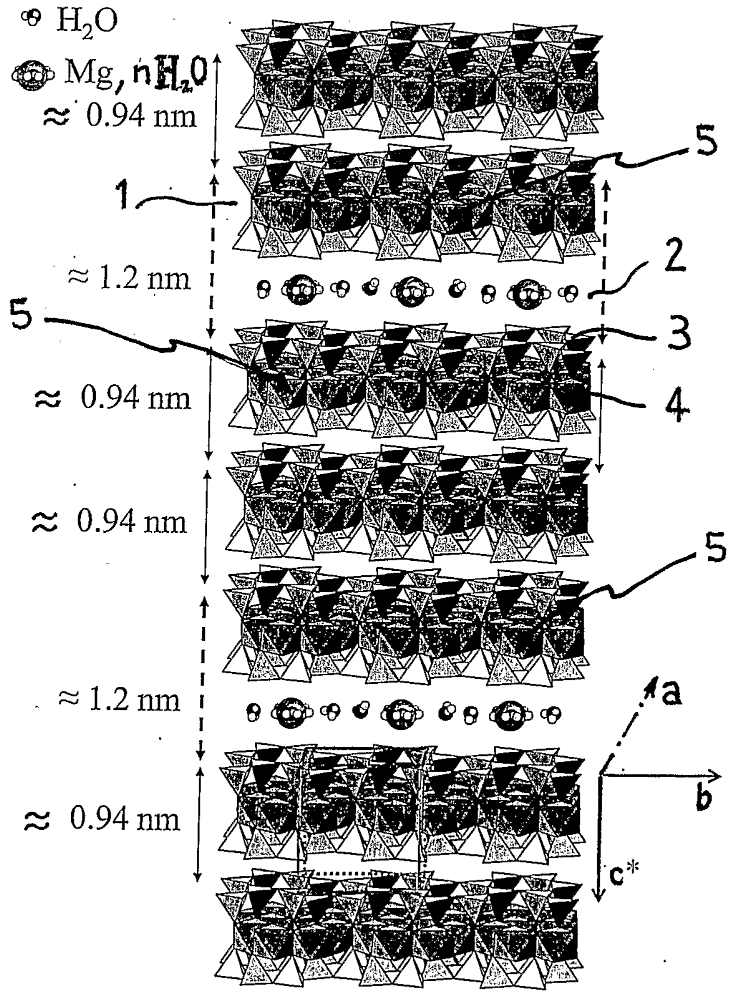

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **DECARREAU et al.** Synthèse et stabilité des stévensites kérolites et talcs, magnésiens et nickelifères, entre 80 et 240°C. *R. Acad. Scie. Paris,* 1989, 301-306